(19) Europäisches Patentamt
European Patent Office
Office européen des brevets

(11) Veröffentlichungsnummer: **0 059 354**
**B1**

(12) # EUROPÄISCHE PATENTSCHRIFT

(45) Veröffentlichungstag der Patentschrift: **20.06.84**

(51) Int. Cl.³: **G 03 C 5/54**, C 09 B 29/44 // C09B45/34

(21) Anmeldenummer: **82101076.6**

(22) Anmeldetag: **13.02.82**

(54) **Farbfotografisches Aufzeichnungsmaterial.**

(30) Priorität: **27.02.81 DE 3107540**

(43) Veröffentlichungstag der Anmeldung: **08.09.82 Patentblatt 82/36**

(45) Bekanntmachung des Hinweises auf die Patenterteilung: **20.06.84 Patentblatt 84/25**

(84) Benannte Vertragsstaaten: **BE DE FR GB**

(56) Entgegenhaltungen: **DE - A - 2 740 719**

(73) Patentinhaber: **AGFA-GEVAERT Aktiengesellschaft, D-5090 Leverkusen 1 (DE)**

(72) Erfinder: **Bergthaller, Peter, Dr., Wolfskaul 1, D-5000 Köln 80 (DE)**
Erfinder: **Schenk, Günther, Dr., Rybnikerstrasse 6, D-5000 Köln 80 (DE)**
Erfinder: **Wolfrum, Gerhard, Dr., Domblick 17, D-5090 Leverkusen 3 (DE)**
Erfinder: **Runzheimer, Hans-Volker, Dr., In der Hildscheid 2, D-5068 Odenthal-Glöbusch (DE)**
Erfinder: **Heidenreich, Holger, Dr., Andreas-Gryphius-Strasse 22, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft ein farbfotografisches Aufzeichnungsmaterial für die Herstellung farbiger Bilder nach den Farbdiffusionsübertragungsverfahren, das zugeordnet zu mindestens einer lichtempfindlichen Silberhalogenidemulsionsschicht eine nicht diffundierende farbgebende Verbindung enthält, aus der bei der Entwicklung ein diffusionsfähiger komplexierbarer Azofarbstoff freigesetzt wird.

Das Farbdiffusionsübertragungsverfahren beruht darauf, dass bei der Entwicklung in einem lichtempfindlichen Element nach Massgabe einer vorangegangenen Belichtung eine bildmässige Verteilung diffusionsfähiger Farbstoffe erzeugt und auf ein Bildempfangselement übertragen wird. In einigen Fällen lässt sich die Lichtechtheit der nach einem solchen Verfahren erzeugten Farbbilder in bekannter Weise dadurch verbessern, dass durch Metallionen komplexierbare Farbstoffe, z.B. Tridentat-azofarbstoffe verwendet werden, die durch nachträgliche Behandlung mit geeigneten Metallionen stabile Farbstoff-Metall-Komplexe bilden. Die Verbesserung der Lichtechtheit von Azofarbstoffbildern, die nach dem Farbdiffusionsübertragungsverfahren oder nach einem anderen fotografischen Verfahren, etwa nach dem Silberfarbbleichverfahren erhalten worden sind, durch Komplexierung mit Metallionen ist beispielsweise bekannt aus DE-B-1 116 532 oder DE-B-1 125 279.

In DE-A-2 740 719 sind nicht diffundierende farbgebende Verbindungen (Farbabspalter) beschrieben, die bei der Entwicklung diffusionsfähige metallisierbare Azofarbstoffe der Formel I freisetzen,

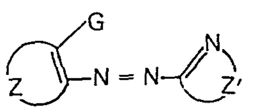

(I)

worin bedeuten

- Z die zur Vervollständigung eines aromatischen, carbocyclischen oder heterocyclischen Kernes mit mindestens einem Ring mit 5 bis 7 Atomen erforderlichen Atome;
- Z′ die zur Vervollständigung eines heterocyclischen Ringes erforderlichen Atome; und
- G eine zur Ausbildung eines Metallchelates befähigte Gruppe.

Falls bei derartigen Farbstoffen Z′ einen 2-Amino-3-hydroxypyridinrest oder einen über die 1-Stellung verknüpften 4-Hydroxyisochinolinrest vervollständigt, weisen die damit nach Metallisierung durch Nickel- oder Kupferionen erhaltenen Metallkomplex-Bildfarbstoffe einen stumpfen Farbton auf, der mit demjenigen der bekannten blaugrünen Bildfarbstoffe etwa der Phthalocyaninfarbstoffe oder der 4-(4-Nitrophenylazo)-1-naphtholfarbstoffe in keiner Weise vergleichbar ist. Der damit verbundene Qualitätsverlust macht den Vorteil der raschen Diffusion oder der höheren Lichtbeständigkeit zunichte und steht einer technischen Verwendung hemmend im Weg.

Noch mehr gilt der Nachteil der ungünstigen Absorption für die gleichfalls in DE-A-2 740 719 sowie in US-A-4 147 544 und US-A-4 165 238 genannten 2-(5-Nitro-2-pyridylazo)-1-naphthole und die in US-A-4 204 870 und US-A-4 207 104 genannten 2-(5′-Sulfamoyl-2-pyridylazo)-4-alkoxy-1-naphthole und 2-(Benzothiazolylazo)-1-naphthole, die sich durch hohe Nebendichten im Wellenlängenbereich des blauen Lichtes als sogenannte «unechte» Blaugrünfarbstoffe erweisen.

Der Erfindung liegt die Aufgabe zugrunde nachmetallisierbare Monoazofarbstoffe mit guter Diffusionsfähigkeit zu finden, die sich durch besonders klare blaugrüne Farbtöne der aus ihnen erhaltenen Nickel- oder Kupferkomplexe auszeichnen.

Es wurde gefunden, dass diese Aufgabe durch eine besondere bei den Farbstoffen des Standes der Technik für das Farbdiffusionsverfahren bisher nicht beschriebene Substitution im durch Z vervollständigten Ring der Formel I gelöst werden kann.

Gegenstand der Erfindung ist ein farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung enthält, aus der unter den Bedingungen der alkalischen Entwicklung als Funktion der Entwicklung der Silberhalogenidemulsionsschicht ein diffusionsfähiger durch Metallionen komplexierbarer Azofarbstoff freigesetzt wird, dadurch gekennzeichnet, dass der Azofarbstoff der folgenden Formel II entspricht:

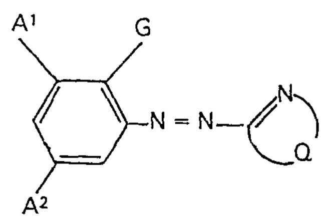

(II)

worin bedeuten:

$A^1$ und $A^2$ entweder elektronegative Substituenten, für deren meta-sigma-Werte $\sigma_m$ (nach D.H. McDaniel und H.C. Brown in J. Org. Chem. 23, 420 ff (1958)) mindestens eine der folgenden zwei Beziehungen gilt:

1. $\sigma_m(A^1), \sigma_m(A^2) \geqslant +0{,}33$
2. $\sigma_m(A^1), \sigma_m(A^2) \geqslant +0{,}75$;

oder $A^1$ einen elektronegativen Substituenten mit einem $\sigma_m$-Wert $\geqslant +0{,}33$ und $A^2$ eine Gruppe $-SO_2-X$, in der X für H, $-NH_2$, -NH-Alkyl, -NH-Aryl, -NH-Acyl, $-NH-SO_2$-Alkyl, $-NH-SO_2$-Aryl, eine cyclische Aminogruppe oder -OH steht;

- Q einen Rest zur Vervollständigung eines 2-Amino-3-hydroxypyridinringes, eines 4,5-Diarylimidazolringes oder eines über die 1-Stellung verknüpften 4-Hydroxyisochinolinringes; und

G eine zur Chelatbildung befähigte Gruppe, insbesondere OH.

Beispiele für geeignete elektronegative Substituenten $A^1$, $A^2$ sind im folgenden aufgeführt:

Halogen, insbesondere F, Cl, Br,
$-NO_2$, $-CN$, $-CF_3$, $-OCF_3$,
-CO-R (R=H, Alkyl, Aryl),
-COOR (R=Alkyl), z.B. $-COOC_2H_5$,
$-CO-NR^1R^2$ ($R^1$=H, Alkyl, Aryl; $R^2$=H, Alkyl; oder $R^1$ und $R^2$=Reste zum Vervollständigen einer gegebenenfalls ein weiteres Heteroatom enthaltenden vorzugsweise 5- bis 7-gliedrigen cyclischen Aminogruppe),
$-SO^2-R$ (R=Alkyl, Aryl),
$-SO_2-NR^1R^2$ ($R^1$=H, Alkyl, Aralkyl, Aryl; $R^2$=H, Alkyl; oder $R^1$ und $R^2$=Reste zum Vervollständigen einer gegebenenfalls ein weiteres Heteroatom enthaltenden 5- bis 7-gliedrigen cyclischen Aminogruppe),

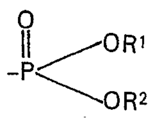 ($R^1$, $R^2$ = Alkyl; oder $R^1$ und $R^2$ = 1,2- oder 1,3-Alkylen).

Bei den erwähnten durch R, $R^1$ oder $R^2$ dargestellten Alkylresten handelt es sich durchweg um solche mit 1 bis 4 C-Atomen; für die genannten Arylreste kommen hauptsächlich Phenyl und Tolyl in Frage; die genannten Alkyl- bzw. Arylreste können gegebenenfalls weitere Substituenten tragen, z.B. eine Sulfamoyl- oder Sulfinatgruppe. Die durch $R^1$ und $R^2$ in der Definition von $-CONR^1R^2$ und $-SO_2NR^1R^2$ vervollständigte cyclische Aminogruppe ist insbesondere eine Pyrrolidin-, Piperidin- oder Morpholingruppe. Der durch $R^1$ und $R^2$ in der Definition von

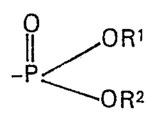 dargestellte Alkylenrest ist vorzugsweise

Ethylen oder 1,3-Propylen. Ein durch $R^1$ in der Definition von $-SO_2-NR^1R^2$ dargestellter Acylrest leitet sich insbesondere von aliphatischen oder aromatischen Carbonsäuren ab.

$A^2$ ist vorzugsweise eine Sulfo-, eine Disulfimid-($-SO_2-NH-SO_2-R^3$, $R^3$=Alkyl oder Aryl) oder eine Sulfamoylgruppe, z.B. eine Gruppe der Formel

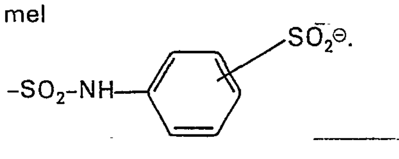

Die durch Q vervollständigten heterocyclischen Gruppen können weitere Substituenten enthalten, insbesondere beispielsweise eine funktionelle Gruppe, die aus der Spaltungsreaktion resultiert und beim abgespaltenen Farbstoff verbleibt. Der 2-Amino-3-hydroxypyridinring kann beispielsweise durch Alkyl oder Halogen substituiert sein. Die Aminogruppe des 2-Amino-3-hydroxypyridinringes kann eine primäre oder sekundäre Aminogruppe sein. Beim 4,5-Diarylimidazolring bestehen Substitutionsmöglichkeiten vorwiegend in den beiden Arylringen; diese sind bevorzugt Phenylringe, die beispielsweise durch Amino, Alkoxy, Sulfonamidogruppen substituiert sein können. Der 4-Hydroxyisochinolinring ist bevorzugt in der 3-Stellung substituiert, z.B. durch Alkyl, Alkylthio oder Alkoxy.

Bei der zur Chelatbildung befähigten Gruppe handelt es sich um eine Gruppe, die in Gegenwart von Metallionen aktiv an der Bildung eines Azofarbstoff(tridentat)-Metall-Komplexes teilnimmt, oder um eine Gruppe, die sich unter den Bedingungen der alkalischen Entwicklung z.B. durch Hydrolyse in eine derartige Gruppe umwandeln lässt. Diese Gruppen sind mit ihrem chelatbildenden Zentrum bevorzugt unmittelbar an den sie tragenden Benzolring gebunden. Beispiele für geeignete zur Chelatbildung befähigte Gruppe sind die folgenden:

-OH, -O-Acyl, $-NH-SO_2-CH_3$, 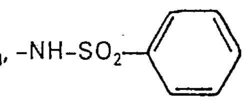

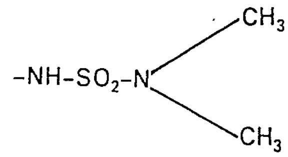 , 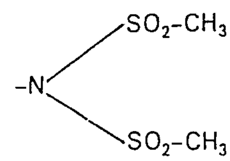 ,

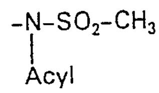

wobei Acyl den von einer aliphatischen oder aromatischen Carbonsäure oder von Kohlensäuremonoester abgeleiteten Acylrest bedeutet.

Weiterhin verfügen die Farbstoffe der Formel II z.B. in Form einiger der bereits bei $A^1$, $A^2$ und G erwähnten Gruppen, oder in Form von Substituenten, die gegebenenfalls über ein geeignetes Bindeglied an diese Gruppen gebunden sind, über geeignete funktionelle Gruppen zur Einstellung eines günstigen Diffusions- und Beizverhaltens, z.B. über anionische oder anionisierbare Gruppen, wie Sulfonat-, Sulfinat-, Phenolat-, Disulfimid-, Carboxylat- oder Sulfamoylgruppen, sowie über mindestens eine funktionelle Gruppe, die aus der Aufspaltung einer Bindung an einem mit einer Ballastgruppe versehenen Trägerrest resultiert und für die Art des Trägerrestes und die Anknüpfung daran charakteristisch ist. Die zuletzt genannte funktionelle Gruppe kann identisch sein mit den zuvor genannten das Diffusions- und Beizverhalten modifizierenden Gruppen. Die erwähnte funktionelle Gruppe kann beispielsweise an einen Alkyl- oder Arylrest gebunden sein, der seinerseits Bestandteil eines der bei $A^1$ und $A^2$ erwähnten elektronegativen Substituenten ist. Sie kann aber auch an einen Alkyl-, Aryl- oder hydrolysierbaren Acylrest in einer der

durch G repräsentierten zur Chelatbildung befähigten Gruppen als Substituent vorliegen. Sie kann ebenso gebunden sein an den durch Q vervollständigten heterocyclischen Ring.

Die den Farbstoffen der Formel II zugrundeliegenden Chromophore sind z.T. bekannt. Jedoch sind Farbstoffe mit dem hier vorgestellten Substitutionsmuster mit zwei zur Azobrücke metaständigen elektronegativen Substituenten im Phenylteil in nicht verwendet worden. In DE-A-2 740 719 wird sogar ausdrücklich darauf hingewiesen, dass besonders vorteilhafte blaugrüne Farbstoffe erhalten werden, wenn der dort mit Z bezeichnete Phenylring eine Nitrogruppe in para-Stellung zur Azogruppe trägt.

Umso überraschender wurde gefunden, dass die Absorptionskurven von Nickel- oder Kupferkomplexen der erfindungsgemässen Farbstoffe ein erheblich günstigeres, für eine saubere Farbtrennung besser geeignetes Bild aufweisen, wenn im Phenylteil Z der Formel I anstelle einer Elektronenakzeptorgruppe in para-Stellung zur Azobrücke eine Kombination von zwei Elektronenakzeptorgruppen in ortho- und para-Stellung zur chelatbildenden Gruppe G vorliegt und wenn die für den gemeinsamen auf die Azobrücke wirkenden Elektronenzug repräsentative Summe

$$\sigma_m(A^1) + \sigma_m(A^2)$$

den Zahlenwert 0,75 erreicht oder überschreitet.

Für die Erläuterung der physikalischen Bedeutung des $\sigma_m$-Wertes nach Hammett ist der Artikel von D.H. McDaniel und H.C. Brown, J. org. Chem. 23, S. 420–427, insbesondere Seite 425 heranzuziehen, ebenso der Artikel von Ritchie und Sager, Prog. Phys. Org. Chem. 2, S. 323–400 (1964).

Einen Sonderfall stellen die bei pH > 2 deprotonierten Reste

$$-SO_2-X$$

dar, in denen X=H, -OH, -NH-$SO_2$-Alkyl, -$NHSO_2$-Aryl oder -NH-Acyl bedeuten und deren elektronegativer Charakter durch die klassischen σ meta-Werte nach McDaniel und H.C. Brown nur unzulänglich beschrieben wird. Überraschenderweise wurde gefunden, dass die Absorptionsspektren der Metallkomplexe mit Sulfo- oder Disulfimidgruppen denen von Farbstoffen mit Sulfonamidgruppen sehr genau entsprechen, besonders dann, wenn $A^1$ ein wie oben beschriebener Elektronenakzeptorrest und $A^2$ eine Gruppe -$SO_2$-X darstellen.

In diesem Zusammenhang muss betont werden, dass die Gegenwart von Gruppen mit Elektronenakzeptorcharakter in ortho- oder para-Stellung zur chelatbildenden Gruppe nach den bekannten Vorstellungen über Struktur-Reaktivitätsbeziehungen nur zu einem Absinken im Elektronendonorcharakter der chelatbildenden Gruppe G führen sollte und damit eigentlich eine Verminderung der Komplexstabilität zu erwarten wäre. Es ist in jeder Beziehung überraschend, dass dieses Verhalten nicht auftritt; die unter Beteiligung von Farbstoffen nach Formel II gebildeten Metallchelate zeigen als Bildfarbstoffe ausgezeichnete Stabilität gegen pH-Abfall in der fotografischen Schicht. Ausserdem werden die betreffenden Farbstoffe beim Kontakt mit Nickel- oder Kupferionen augenblicklich metallisiert. Es ist überraschend, dass die günstigen spektralen Eigenschaften der blaugrünen Nickel- oder Kupferchelate aus Farbstoffen der Formel II auf den beschriebenen Substitutionstyp beschränkt sind und beispielsweise in Chelaten aus Farbstoffen der Formeln III, IV oder V nicht festgestellt werden können. In diesen Fällen treten ebenso wie bei den Farbstoffen des Standes der Technik hohe Nebenabsorptionen im grünen und blauen Spektralbereich auf, ausserdem fallen die kurzwelligen Flanken der langwelligen Absorptionsbande flacher aus. Auch bei langwelliger Lage des Absorptionsmaximums wirken die Farbstoffe dann insgesamt stumpfer.

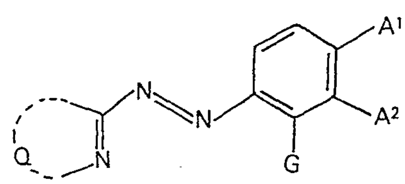
(III)

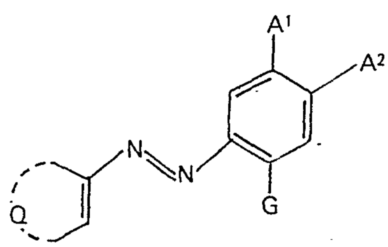
(IV)

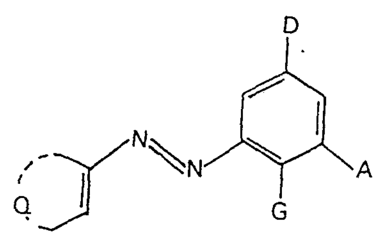
(V)

D = eine Gruppe mit Elektronendonoracharakter oder schwachem Elektronenakzeptorcharakter, gekennzeichnet durch einen $\sigma_m$-Wert von ≤0,21.

Den erfindungsgemässen Farbstoffen der Formel II ist eigen, dass die Absorptionsspektren der Farbstoffe nach kürzeren Wellenlängen verschoben sind. Eine alkalilabile Blockierung der chelatbildenden Gruppe G durch Acylgruppen oder verwandte Schutzgruppen ist dazu nicht erforderlich, doch führt die Acylierung zu einer weiteren Verschiebung der Absorption des Chromophors nach kürzeren Wellenlängen. Zusätzlich reduziert sie im allgemeinen die Farbstärke, so dass die Absorption der Schicht mit der eingelagerten nicht diffundierenden farbgebenden Verbindung

die Sensibilisierung der zugeordneten Silberhalogenidemulsionsschicht nicht durch einen Filtereffekt stört.

Die Formel II bezieht sich auf die erfindungsgemässen bei der Entwicklung freigesetzten diffusionsfähigen Farbstoffe. Diese werden freigesetzt aus entsprechenden eingelagerten nichtdiffundierenden farbgebenden Verbindungen (Farbabspalter). Hierbei handelt es sich um Verbindungen, in denen ein Farbstoffrest gemäss Formel II an einen mindestens eine Ballastgruppe enthaltenden Trägerrest CAR gebunden ist, gegebenenfalls unter Zwischenschaltung eines geeigneten Bindegliedes. Die Anknüpfung des Farbstoffes der Formel II an den Trägerrest kann beispielsweise über einen der beiden elektronegativen Substituenten $A^1$ und $A^2$, über die zur Chelatbildung befähigte Gruppe G oder an den durch Q vervollständigten heterocyclischen Ring erfolgen. Die erfindungsgemässen Farbabspalter lassen sich dementsprechend durch die folgende Formel VI darstellen

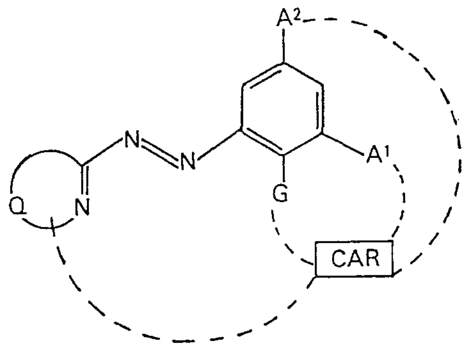

(VI)

worin

Q, $A^1$, $A^2$ und G die bereits angebene Bedeutung haben,

CAR einen mindestens eine diffusionsfestmachende Gruppe enthaltenden Trägerrest bedeutet,

und die gestrichelten Linien mögliche Verknüpfungsstellen kennzeichnen. In den erfindungsgemässen Farbabspaltern liegt somit der Trägerrest als Substituent an dem durch Q vervollständigten heterocyclischen Ring vor oder ist als Substituent in einer der durch $A^1$, $A^2$ oder G dargestellten Gruppen enthalten.

Der durch CAR dargestellte Trägerrest weist ausser der diffusionsfestmachenden Gruppe mindestens eine Gruppierung auf, die als Funktion der Entwicklung einer Silberhalogenidemulsionsschicht spaltbar ist, so dass der an den Trägerrest gebundene Farbstoff gegebenenfalls zusammen mit einem kleinen Bruchstück des ursprünglichen Trägerrestes von der diffusionsfestmachenden Gruppe abgetrennt und somit aus der Verankerung in der Schicht gelöst werden kann. Je nach der Funktionsweise der spaltbaren Gruppierung können die Trägerreste unterschiedliche Strukturen aufweisen.

Bei den erfindungsgemässen Farbabspaltern kann es sich beispielsweise um nichtdiffundierende Farbkuppler handeln, die in der Kupplungsstelle einen Farbstoffrest gemäss der vorliegenden Erfindung tragen und diesen als Folge einer chromogenen Kupplung in Freiheit setzen. Derartige Abspaltmechanismen sind beispielsweise in DE-C-1 095 115 und in US-A-3 227 550 beschrieben.

Als besonders vorteilhaft erweisen sich jedoch redoxaktive Farbabspalter der Formel

Ballast-Redox-Farbstoff

worin bedeuten

Ballast eine diffusionsfestmachende Gruppe

Redox eine Gruppe, die unter den Bedingungen der alkalischen Entwicklung oxidierbar oder reduzierbar ist und je nachdem, ob sie im oxidierten oder im reduzierten Zustand vorliegt, in unterschiedlichem Ausmass einer Eliminierungsreaktion, einer nukleophilen Verdrängungsreaktion oder einer Hydrolyse unterliegt mit der Folge, dass der Rest Farbstoff abgespalten wird

Farbstoff der Rest eines diffusionsfähigen Farbstoffes, im vorliegenden Fall eines Farbstoffes gemäss Formel II.

Als diffusionsfestmachende Reste sind solche Reste anzusehen, die es ermöglichen, die erfindungsgemässen Farbabspalter in den üblicherweise bei fotografischen Materialien verwendeten hydrophilen Kolloiden diffusionsfest einzulagern. Hierzu sind vorzugsweise organische Reste geeignet, die im allgemeinen garadkettige oder verzweigte aliphatische Gruppen mit im allgemeinen 8 bis 20 C-Atomen und gegebenenfalls auch carbocyclische oder heterocyclische gegebenenfalls aromatische Gruppen enthalten. Mit dem übrigen Molekülteil sind diese Reste entweder direkt oder indirekt, z.B. über eine der folgenden Gruppen verbunden:

$-NHCO-$, $-NHSO_2-$, $-NR-$, wobei R Wasserstoff oder Alkyl bedeutet, $-O-$ oder $-S-$. Zusätzlich kann der diffusionsfestmachende Rest auch wasserlöslichmachende Gruppen enthalten, wie z.B. Sulfogruppen oder Carboxylgruppen, die auch in anionischer Form vorliegen können. Da die Diffusionseigenschaften von der Molekülgrösse der verwendeten Gesamtverbindung abhängen, genügt es in bestimmten Fällen, z.B., wenn das verwendete Gesamtmolekül gross genug ist, als «diffusionsfestmachende Reste» auch kürzerkettige Reste zu verwenden.

Redoxaktive Trägerreste der Struktur Ballast-Redox- und entsprechende Farbabspalter sind in den verschiedensten Ausführungsformen bekannt.

Oxidierbare Farbabspalter, die nach Oxidation einer Hydrolyse unterliegen unter Freisetzung eines diffusionsfähigen Farbstoffes, sind beispielsweise beschrieben in: DE-A-2 242 762, DE-A-2 406 664, DE-A-2 505 246, DE-A-2 613 005, DE-A-2 645 656 und folgenden Research Disclosure Publikationen: Nr. 15 157 (November 1976), Nr. 15 654 (April 1977), Nr. 17 736 (Januar 1979). Hierbei handelt es sich überwiegend um Verbindungen, in denen ein Farbstoffrest über eine Sulfonamidgruppe an einen oxidierbaren Trägerrest gebunden ist; der bei der Entwicklung freigesetzte Farbstoff weist dementsprechend eine Sulfamoylgruppe auf.

Oxidierbare Farbabspalter, die in oxidierter Form einer intramolekularen Verdrängungsreaktion unterliegen unter Freisetzung eines diffusionsfähigen Farbstoffes, sind beispielsweise Gegenstand von US-A-3 443 940. Aus diesen Farbabspaltern werden Farbstoffe mit Sulfinatgruppen freigesetzt.

Beispiele für oxidierbare Trägerreste, von denen in oxidierter Form ein daran gebundener Farbstoffrest abgespalten wird, sind im folgenden aufgeführt:

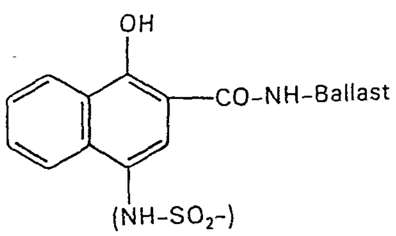

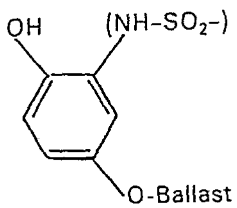

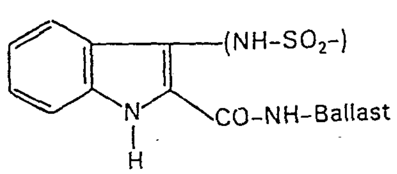

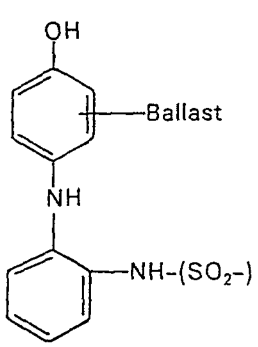

---

Die in Klammern eingeschlossenen Gruppen werden zusammen mit dem Farbstoffrest abgespalten; sie verbleiben als funktionelle Gruppen beim Farbstoff, an den sie gegebenenfalls über ein Zwischenglied gebunden sind.

Bei den bisher genannten Farbabspaltertypen werden die Farbstoffreste proportional zur Bildungsrate eines Oxidationsproduktes durch Entwicklung von Silberhalogenid oder durch katalytische Verstärkung z.B. mit $H_2O_2$, abgespalten. Dieses Prinzip arbeitet daher als Negativverfahren und bedarf zur Herstellung positiver Bilder einer Umkehrung, z.B. durch Verwendung direkt positiver Emulsionen oder durch eine nach dem Prinzip der Silbersalzdiffusion arbeitende Schichtanordnung.

Es ist besonders vorteilhaft, wenn der einen Ballastgruppe und einen Redoxteil aufweisende Trägerrest so aufgebaut ist, dass der diffusionsfähige Azofarbstoff annähernd umgekehrt proportional zum Entwicklungszustand der Silberhalogenidschicht unter alkalischen Bedingungen freigesetzt wird. In diesem Fall handelt es sich um ein von vornherein positiv arbeitendes System, das zur Herstellung positiver Bilder unter Verwendung herkömmlicher negativer Silberhalogenidemulsionen geeignet ist. Derartige Farbabspalter sind ebenfalls bekannt und werden im folgenden beschrieben.

Oxidierbare Farbabspalter, die in oxidierter Form stabil sind, jedoch in reduzierter Form einer intramolekularen nukleophilen Verdrängungsreaktion unterliegen unter Abspaltung eines Farbstoffrestes, sind beispielsweise Gegenstand von DE-A-2 402 900 und DE-A- 2 543 902.

Oxidierbare Farbabspalter, die in oxidierter Form stabil sind, jedoch in reduzierter Form den Farbstoff in einer Eliminierungsreaktion freisetzen, sind beschrieben in DE-A-2 823 159 und DE-A-2 854 946.

Die Wirkungsweise der beiden zuletzt genannten Gruppen von Farbabspaltern lässt sich umkehren, wenn derartige Verbindungen nicht in reduzierter Form, sondern in oxidierter Form eingesetzt werden. Auf diese Weise kommt man zu den im folgenden erwähnten Farbabspaltertypen.

Reduzierbare Farbabspalter, die nach Reduktion einer intramolekularen nukleophilen Verdrängungsreaktion unter Freisetzung eines Farbstoffrestes unterliegen, sind Gegenstand der DE-A-2 809 716. Diese Verbindungen werden als sogenannte Bend-Verbindungen bezeichnet (Bend-«Balasted Electron-accepting Nucleophilic Displacement»).

Reduzierbare Farbabspalter, die nach Reduktion einer Eliminierungsreaktion unterliegen unter Freisetzung eines Farbstoffes sind Gegenstand der veröffentlichten europäischen Patentanmeldung 4399 und der englischen Patentanmeldung 8 012 242.

Weitere Klassen von reduzierbaren Farbabspaltern, die nach ähnlichen Reaktionsweisen reduktiv spaltbar sind unter Freisetzung von Farbstoffen, sind Gegenstände der DE-A-30 08 588 und 30 14 669.

Beispiele für reduzierbare Trägerreste, von denen ein daran gebundener Farbstoffrest reduktiv abgespalten wird, sind im folgenden aufgeführt.

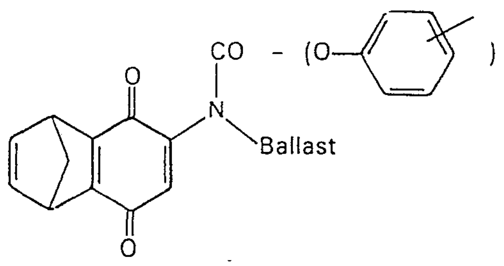

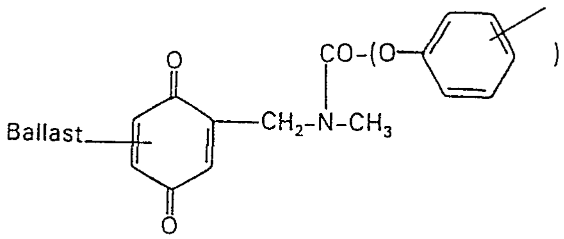

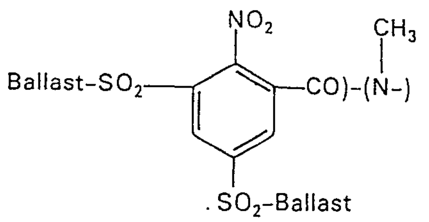

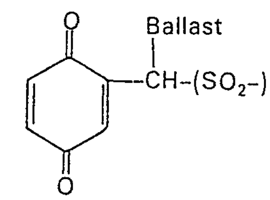

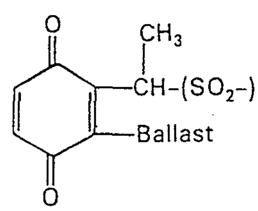

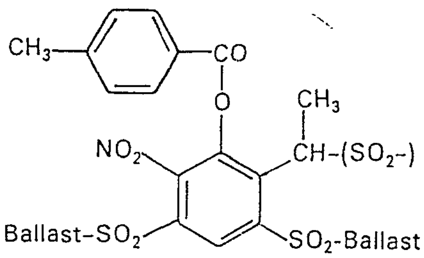

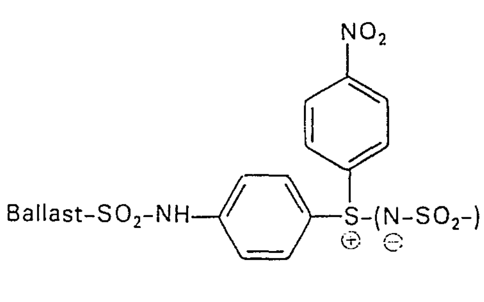

Die in Klammern eingeschlossenen Gruppen sind funktionelle Gruppen des Farbstoffrestes und werden zusammen mit diesen vom zurückbleibenden Teil des Trägerrestes abgetrennt. Bei der funktionellen Gruppe kann es sich um einen der Substituenten handeln, die bei der Erläuterung der Bedeutung der Reste $A^1$, $A^2$ oder G in der Formel II erwähnt worden sind und die einen unmittelbaren Einfluss auf die Absorptions- und Komplexbildungseigenschaften der erfindungsgemässen Farbstoffe der Formel II ausüben. Die funktionelle Gruppe kann andererseits aber auch von dem Chromophor des erfindungsgemässen Farbstoffs durch ein Zwischenglied getrennt sein, indem sie sich als Substituent in einer der für $A^1$, $A^2$ und G definierten Gruppen oder an einem der durch Q vervollständigten heterocyclischen Ringe befindet, ohne dass hierdurch ein Einfluss auf die Absorptions- und Komplexbildungseigenschaften wirksam werden müsste. Die funktionelle Gruppe kann jedoch gegebenenfalls zusammen mit dem Zwischenglied von Bedeutung sein für das Diffusions- und Beizverhalten der erfindungsgemässen Farbstoffe. Geeignete Zwischenglieder sind beispielsweise Alkylen- oder Arylengruppen.

Die zuletzt erwähnten Klassen von reduzierbaren, reduktiv spaltbaren Farbabspaltern werden zweckmässigerweise zusammen mit sogenannten Elektronendonorverbindungen (ED-Verbindungen) verwendet. Letztere wirken als Reduktionsmittel, das bei der Entwicklung des Silberhalogenids bildmässig verbraucht wird und mit seinem nicht verbrauchten Anteil seinerseits den zugeordneten Farbabspalter reduziert und dadurch die Abspaltung des Farbstoffes bewirkt. Geeignete ED-Verbindungen sind beispielsweise nicht oder nur wenig diffundierende Derivate des Hydrochinons, des Benzisooxazolons, des p-Aminophenols oder der Ascorbinsäure (z.B. Ascorbylpalmitat), die beispielsweise in DE-A-2 809 716 beschrieben sind. Besonders günstige ED-Verbindungen sind Gegenstand der DE-A-30 06 268.

Beispiele geeigneter ED-Verbindungen sind im folgenden aufgeführt.

ED 1

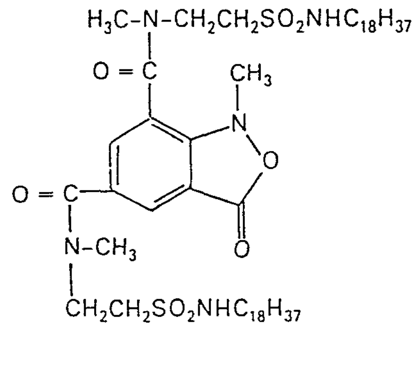

ED 2

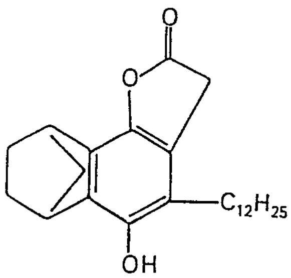

ED 3

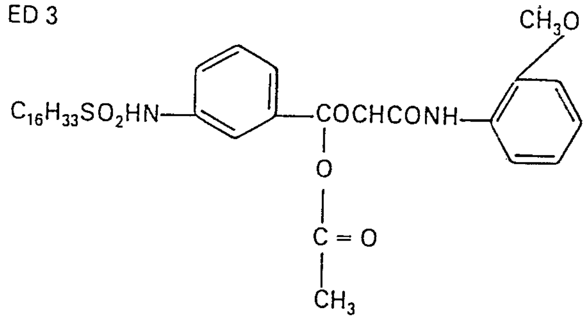

ED 4

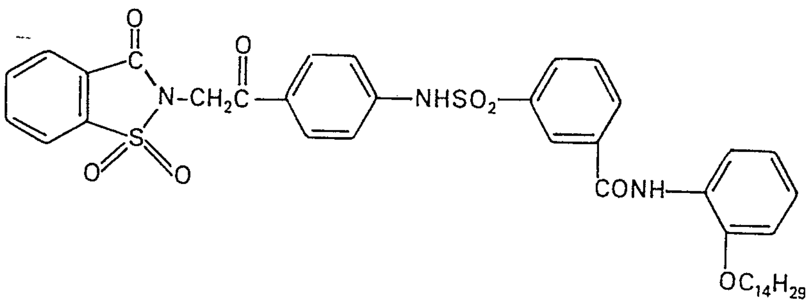

ED 5

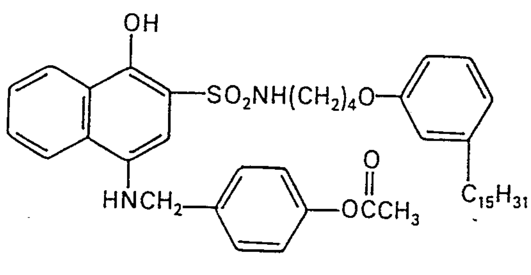

ED 6

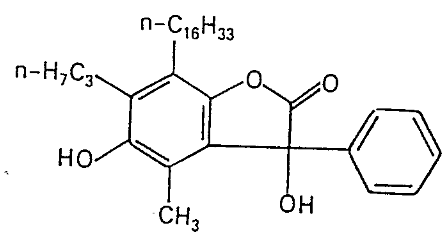

ED 7

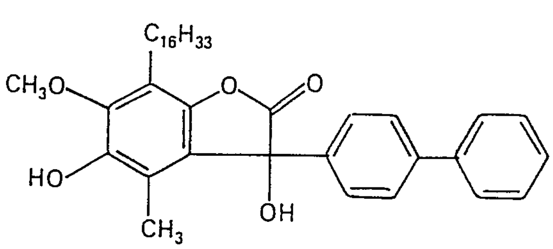

Beispiele für erfindungsgemässe, zu blaugrünen Nickel- oder Kupferkomplexen mit besonders günstiger Absorption metallisierbare Monoazofarbstoffe der Formel II sind im folgenden aufgeführt.

Farbstoff 1

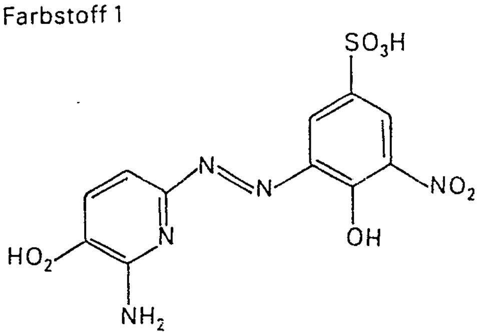

Farbstoff 2

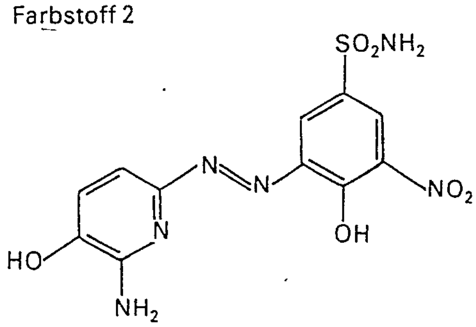

Farbstoff 3

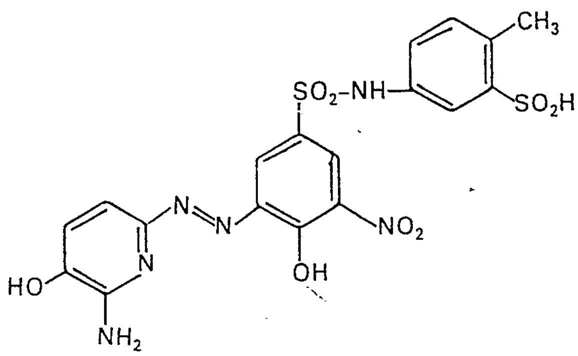

Farbstoff 4

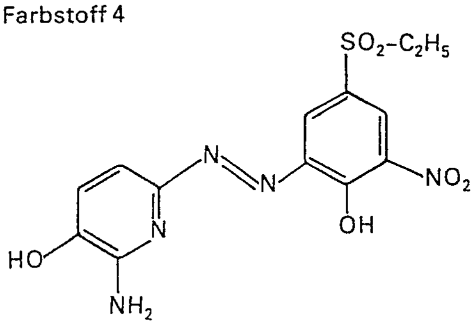

Farbstoff 5

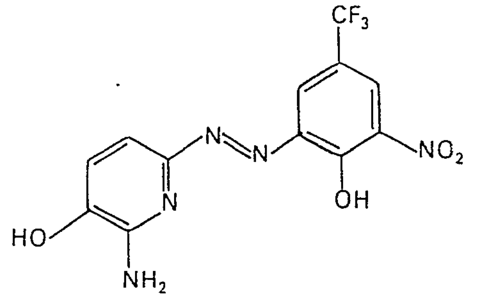

Farbstoff 6

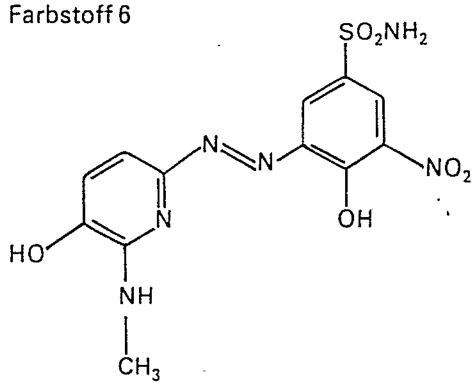

Farbstoff 7

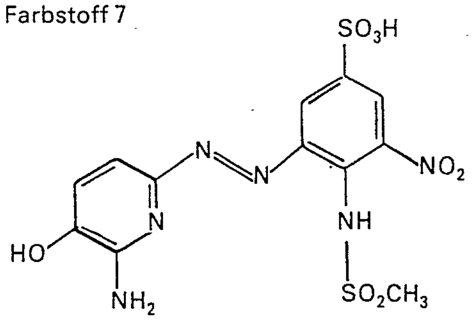

Farbstoff 8

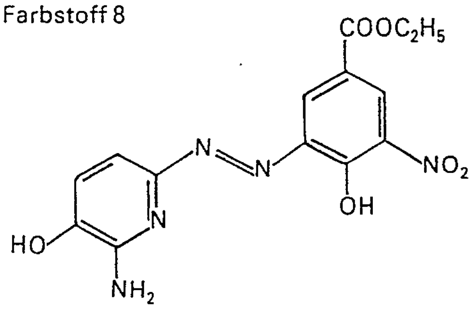

Farbstoff 9

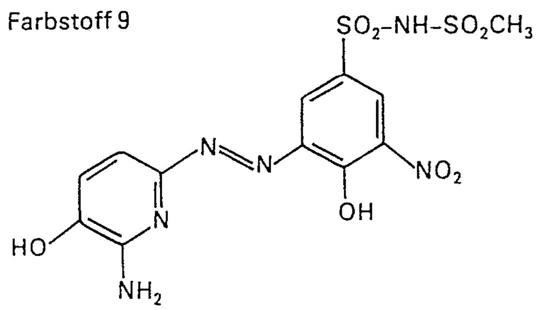

Farbstoff 10

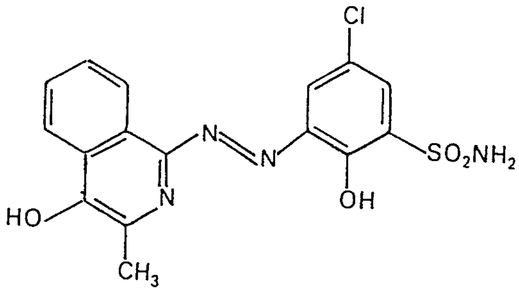

Farbstoff 11

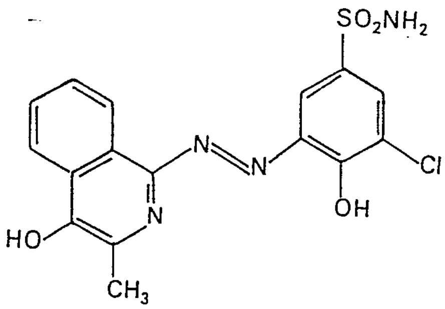

Farbstoff 12

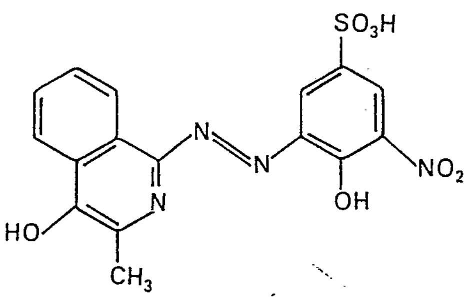

Farbstoff 13

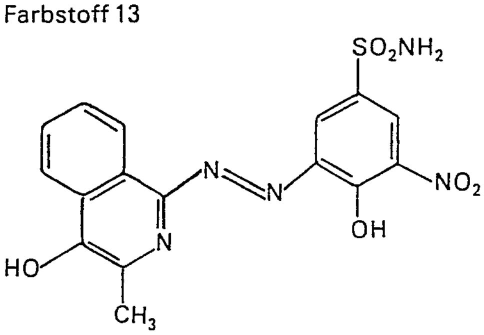

Farbstoff 14

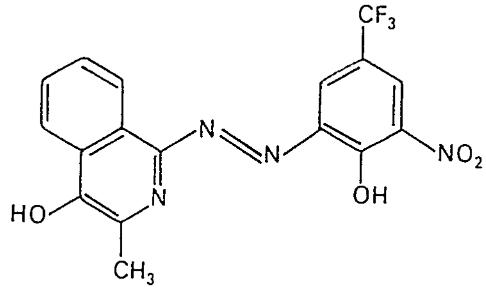

Farbstoff 15

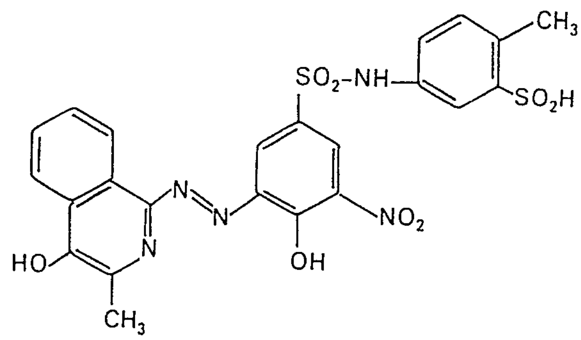

Farbstoff 16

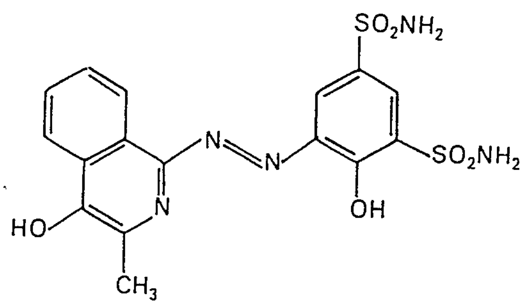

Farbstoff 17

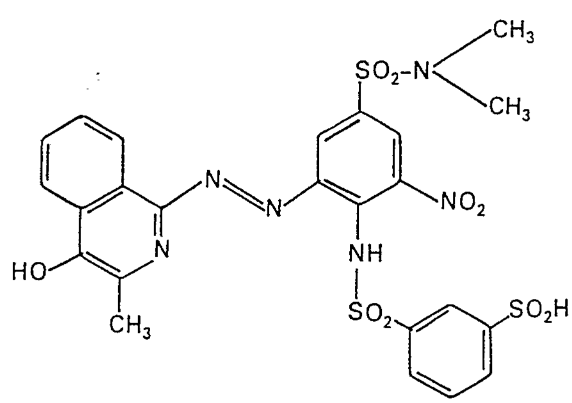

Farbstoff 18

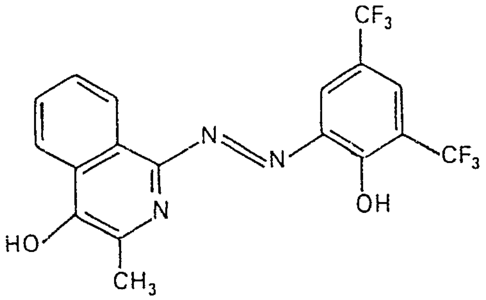

Farbstoff 19

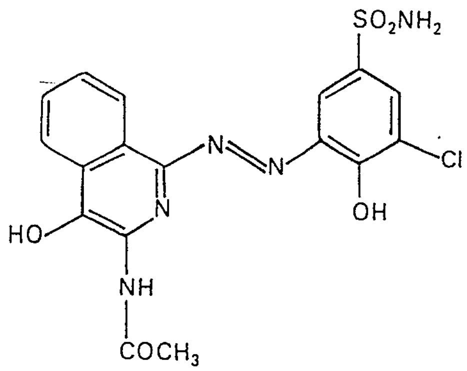

Farbstoff 20

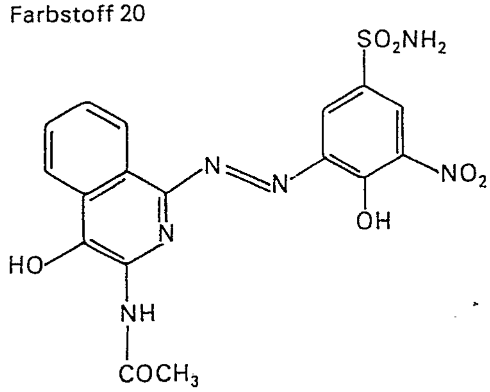

Farbstoff 21

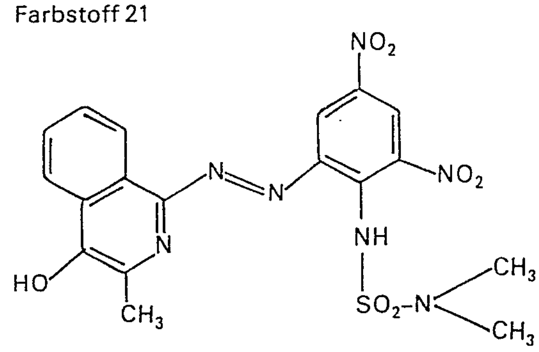

Farbstoff 22

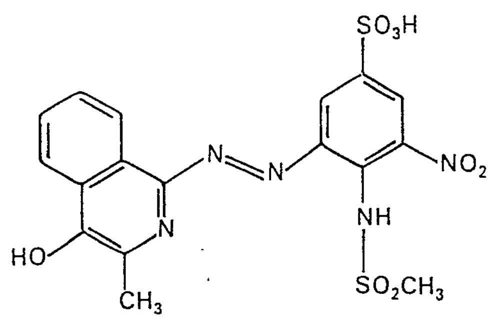

Farbstoff 23

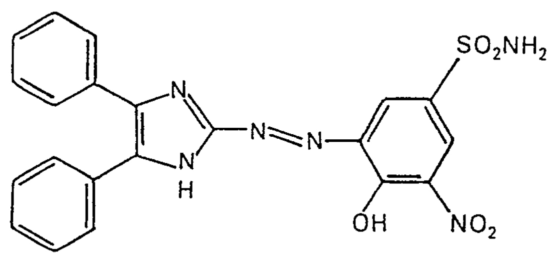

Farbstoff 24

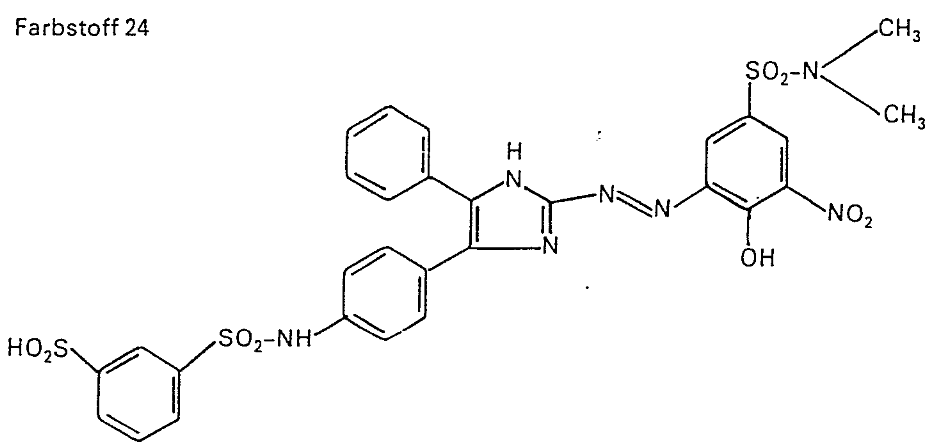

Farbstoff 25

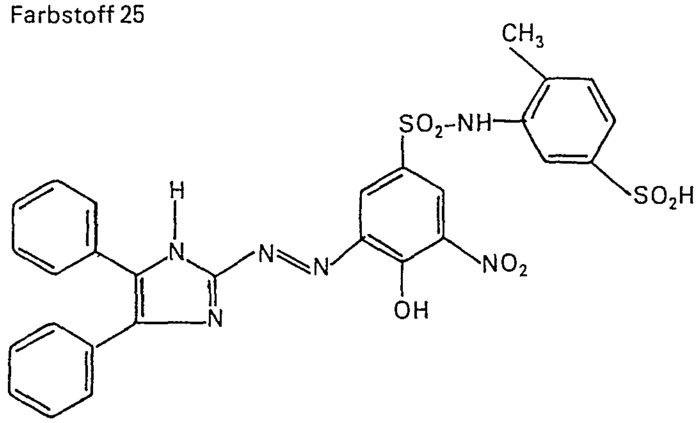

Farbstoff 26

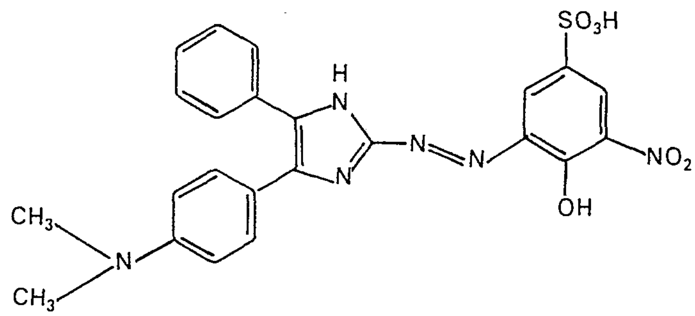

Für die Herstellung der erfindungsgemässen Monoazofarbstoffe der Formel II eignen sich verschiedene zweifach durch Elektronenakzeptorgruppen substituierte 2-Amino-phenole oder 2-Sulfamidoaniline, bzw. Vorstufen dafür. So ist es z.B. möglich, ein ortho zur Azobrücke stehendes Chloratom entweder während der Diazotierung und Kupplung oder im Anschluss daran gegen OH auszutauschen.

Beispielhaft sind in der nachstehenden Tabelle eine Reihe von Verbindungen aufgeführt, unter deren Verwendung als Diazoteil die erfindungsgemässen Farbstoffe (Formel II) und nach deren Anknüpfung an einen Trägerrest die erfindungsgemässen Farbabspalter (Formel VI) hergestellt werden können.

2-Aminophenole bzw. 2-Sulfonamidoaniline («Amin»)

Amin 1

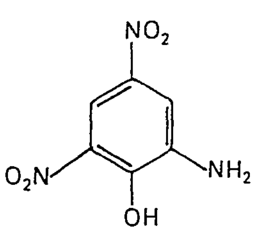

Amin 2

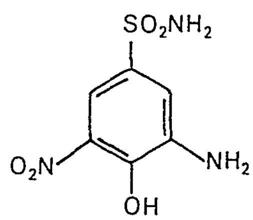

Amin 3

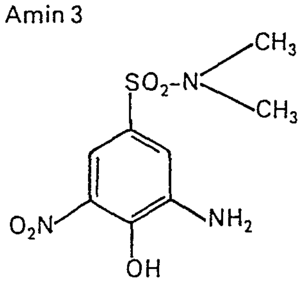

Amin 4

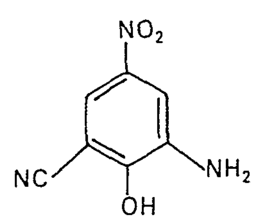

Amin 5

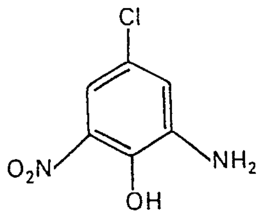

Amin 6

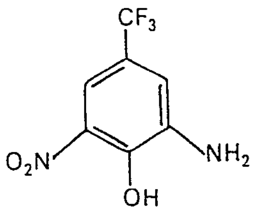

Amin 7

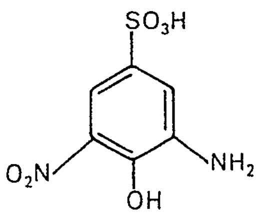

Amin 8

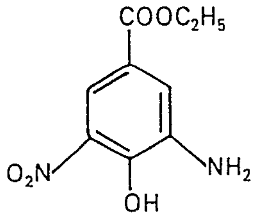

Amin 9

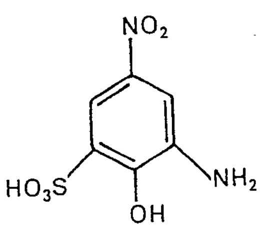

Amin 10

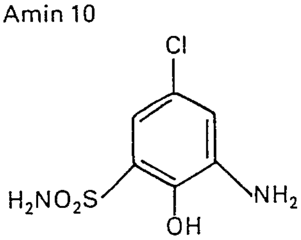

Amin 11

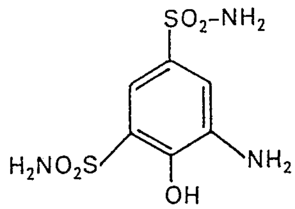

Amin 12

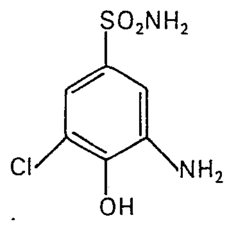

Amin 13

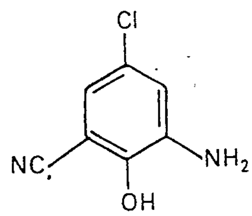

Amin 14

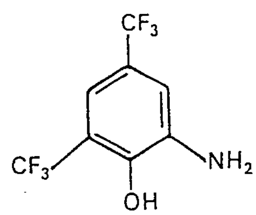

Amin 15

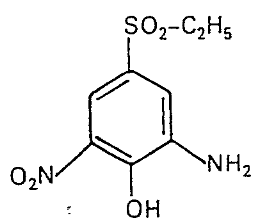

Amin 16

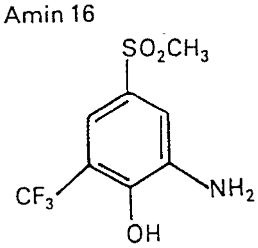

Amin 17

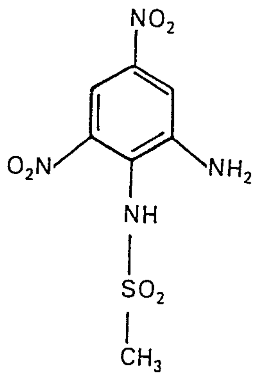

Amin 18

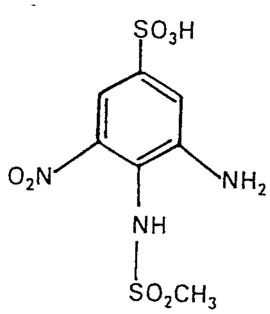

Amin 19

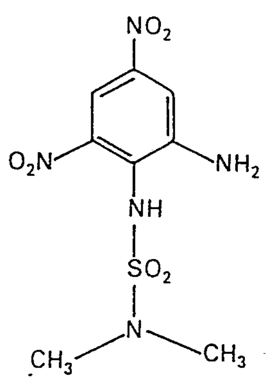

Amin 20

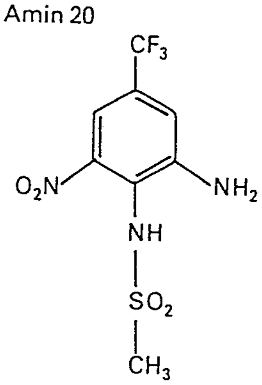

Amin 21

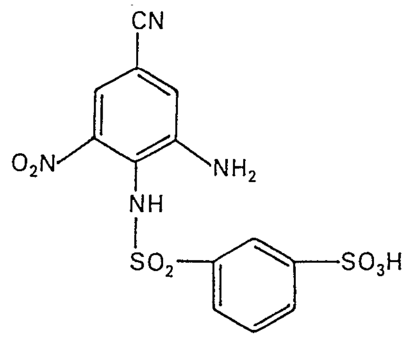

Amin 22

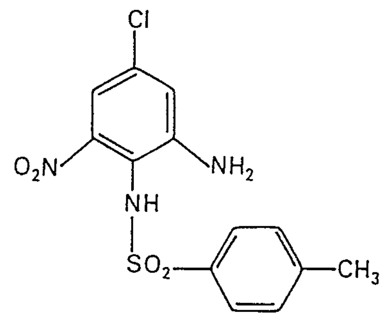

Amin 23

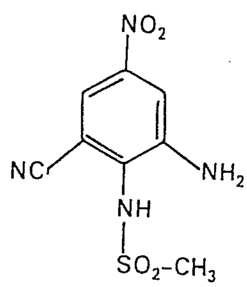

Amin 24

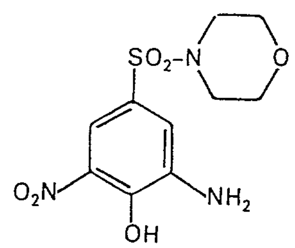

Amin 25

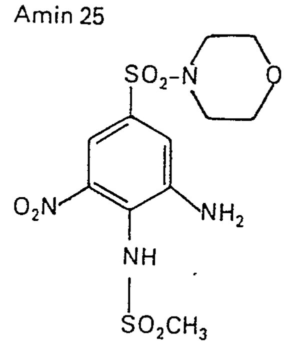

Amin 26

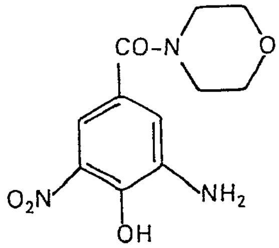

Amin 27

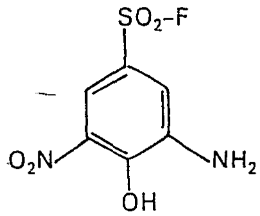

Amin 28

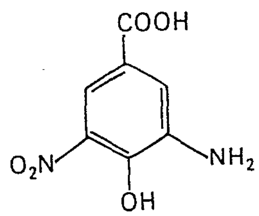

Amin 29

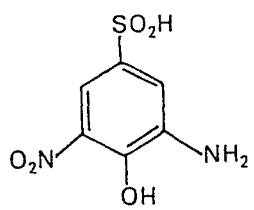

Da die Verknüpfung des Farbstoffes der Formel II mit dem Trägerrest nicht norwendigerweise über den Diazoteil (Aminteil) erfolgen muss, sondern genauso gut über den heterocyclischen Kupplerteil erfolgen kann, kann im Diazoteil auch auf die Anordnung von Funktionen, die zur Herstellung einer Verknüpfungsstelle geeignet sind, verzichtet werden.

Als Kuppler zur Herstellung der erfindungsgemässen, zu blaugrünen Nickel- oder Kupferkomplexen mit besonders günstiger Absorption metallisierbaren Monoazofarbstoffe der Formel II eignen sich verschiedene 2-Amino-3-pyridinole, 4-Hydroxyisochinoline mit besetzter 3-Position sowie Diphenylimidazole. Besonders günstige Ergebnisse werden mit 2-Amino-3-pyridinolen erhalten, deren Aminogruppe entweder unsubstituiert oder nicht durch Acylgruppen substituiert ist.

Nachstehend ist eine Reihe von geeigneten Kupplern in Zusammenfassung aufgeführt.

Kuppler 1

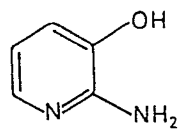

Kuppler 2

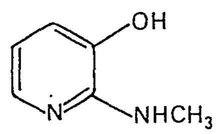

Kuppler 3

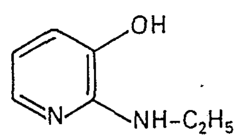

Kuppler 4

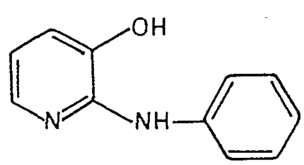

Kuppler 5

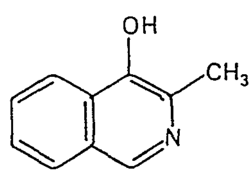

Kuppler 6

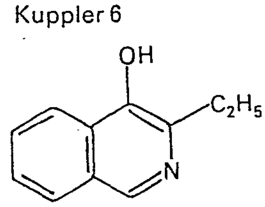

Kuppler 7

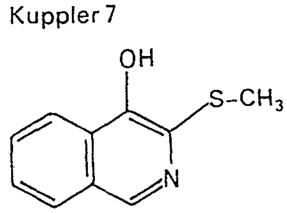

Kuppler 8

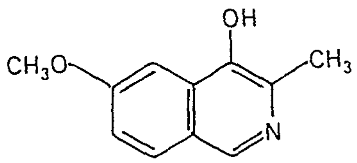

Kuppler 9

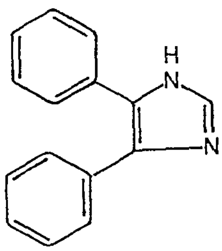

Kuppler 10

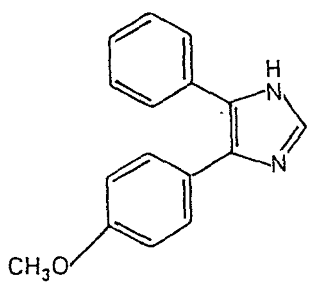

Kuppler 11

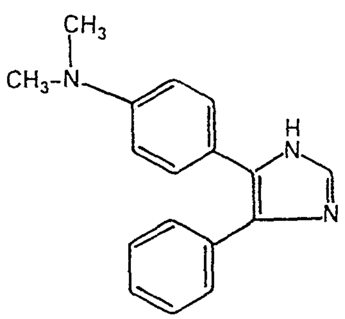

Kuppler 12

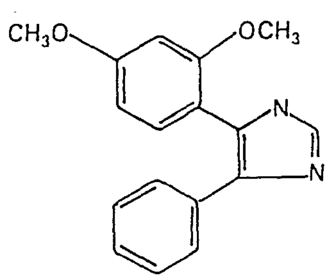

Die zur Herstellung von nachkomplexierbaren Farbstoffen der Formel II verwendeten Ausgangsmaterialien (Amine und Kuppler) sind im allgemeinen bekannt, bzw. können nach bekannten Verfahren hergestellt werden. Zur Erläuterung der dabei verwendeten Synthesemethoden werden nachstehend beispielhaft Herstellungswege für einige der angegebenen Amine angegeben.

Amin 3: 2-Amino-6-nitrophenol-4-sulfonsäuredimethylamid

23,4 g 2-Amino-6-nitrophenol-4-sulfonsäure (0,1 Mol) werden unter Rühren am Dampfbad in 450 ml Pyridin mit 25 g Acetanhydrid versetzt. Man rührt 30 Minuten weiter und saugt nach Abkühlen auf Raumtemperatur ab. Die rohe Diacetylverbindung wird bei 60°C mit 45 g $PCl_5$ 1 h gerührt und nach Abkühlen auf 200 g Eis ausgetragen. Man saugt ab und kristallisiert das erhaltene Sulfochlorid zweimal aus Acetonitril um. Ausbeute 20 g (73% der Theorie).

Fp. 155°C Das Kernresonanzspektrum weist auf die Konstitution eines 2-Methylbenzoazolsulfochlorids hin (1 Methylsignal).

Zur Umsetzung mit Dimethylamin verrührt man eine Suspension von 2 g Sulfochlorid in 6 ml Acetonitril bei Raumtemperatur mit 5 ml 45%iger Dimethylaminlösung, erwärmt 10 Minuten am Dampfbad, stellt mit 10 ml HCl und 4 ml Eisessig sauer und hält eine weitere Stunde am Dampfbad. Nach Zugabe von 4 g Na-Acetat fällt das Produkt beim Abkühlen aus.

Ausbeute: 1,6 g Fp.: 176–180°C

Die Verseifung der NH-Acetylgruppe kann mit gleichem Erfolg auch in 15%iger Natronlauge durchgeführt werden.

Amin 6: 2-Amino-6-nitro-4-trifluormethylphenol

2,6-Dinitro-4-trifluormethylphenol (0,1 Mol) wird nach Jacobs, J. Org. Chem. 36, 242 [1971] hergestellt und nach Zugabe von 5 g $NH_4Cl$ mit der Lösung von 12 g $H_2S$ in ammoniakgesättigtem Methanol bei 45°C reduziert. Man engt ein, zieht das Gemisch mit heissem Isopropanol aus und dampft erneut ein. Geringe Anteile an nicht reduziertem 2,6-Dinitro-4-trifluormethylphenol werden durch Chromatographie über Kieselgel/ Methylenchlorid entfernt. Ausbeute 16 g (77% der Theorie) braunrote Kristalle, Fp.: 80–85°C unter Sinterung ab 70°C.

Amin 11:

Wird aus 2-Aminophenol-4,6-disulfonsäure analog Amin 3 hergestellt. Ausbeute 30% Fp.: 220°C (Zers.).

Amin 13: 3-Amino-5-chlor-salicylsäurenitril

a) Die Herstellung von 5-Chlorsalicylsäurenitril erfolgt durch Umsetzung von 1 Mol 5-Chlorsalicylaldehyd mit der äquimolaren Menge Hydroxylamin-HCl in Pyridin und 2 h Erhitzen mit 2 Mol

Acetanhydrid. Nach Behandlung mit 4 Mol NaOH wird im Vakuum eingedampft, mit Wasser verrührt, abgesaugt.
b) Nitrierung: Der Rückstand wird in die 10-fache Menge $HNO_3$ (D: 1,40) eingetragen. Nach 10 Minuten wird auf Eis gegossen und abgesaugt. Man kristallisiert aus Methanol um. Gelbe Nadeln Fp. 200°C
c) Reduktion: man nimmt das gereinigte Produkt aus b) in 10%iger Natronlauge auf und reduziert mit FeII-Sulfat unter Zugabe von Ammoniak. Vom schwarzen Eisenhydroxid wird abfiltriert und im Vakuum eingeengt. Das Rohprodukt wird mit Methanol aufgenommen und als Eindampfrückstand weiterverwendet.

Amin 18:
4-Chlor-3,5-dinitrobenzolsulfonsäure wird als Kaliumsalz mit der 5-fach molaren Menge Methansulfonamid und Kaliumcarbonat in Dimethylformamid bei 100°C gerührt. Anschliessend wird eingedampft, mit der 3-fach molaren Menge Natriumsulfid in Methanol 2 h bei 55°C gerührt. Nach kurzem Aufkochen wird mit Essigsäure auf pH = 6 gestellt und von ausgeschiedenem Schwefel abfiltriert. Anschliessend wird erneut eingedampft. Die abgeschiedenen rotbraunen Kristalle werden weiterverarbeitet.

Amin 20:
Aus 4-Chlor-3,5-dinitro-1-trifluormethylbenzol mit K-Methansulfonamid in Dimethylsulfoxid; nach anschliessender Reduktion analog Amin 18 erhält man Amin 20 mit Fp. 180°C (unter Zersetzung).

Herstellung des Farbstoffes 1

| | |
|---|---|
| 1 g | 2-amino-6-nitrophenol-4-sulfonsäure (Amin 7) wird mit der Lösung von |
| 0,37 g | Natriumnitrit in 4 ml Wasser in Gegenwart von |
| 20 ml | 10%iger Salzsäure bei 0°C diazotiert. Die nach Zerstören des Nitritüberschusses mit Amidosulfonsäure erhaltene gelbe Diazoniumlösung wird auf die eiskalte Suspension von |
| 0,8 g | 2-Aminopyridinol-3 (Kuppler 1) und |

13 g Kaliumcarbonat in 20 ml Wasser getropft und über Nacht gerührt. Man stellt mit Essigsäure auf pH = 6 und gibt 20 ml gesättigter Kaliumchloridlösung zu. Nach 2 h wird abgesaugt und aus Methanol/Aceton umkristallisiert. Ausbeute 1,1 g rotblaues Pulver.
Nach dem beschriebenen Verfahren werden auch die Farbstoffe 2, 4, 5, 6, 7, 8, 20, 21 hergestellt.

Herstellung des Farbstoffes 11

| | |
|---|---|
| 1 g | 2-Amino-6-chlorphenol-4-sulfonamid (Amin 12) (0,0045 Mol) werden mit 3,8 ml 10%iger Natriumnitritlösung in |
| 12 ml | 10%iger Salzsäure bei 0°C diazotiert. Nach dem Zerstören des Nitritüberschusses wird in die auf 0°C gekühlte Lösung von |
| 0,8 g | 3-Methylisochinolinol-4 (Kuppler 5) und |
| 3,2 g | Natriumacetat in |
| 20 ml | Methanol eingegossen und über Nacht gerührt. Am anderen Tag wird abgesaugt und aus 30%iger Essigsäure umkristallisiert. Ausbeute: 1 g rotviolettes Pulver |

Nach dem Beispiel des Farbstoffes 11 werden auch die Farbstoffe 12, 13 und 19 hergestellt.

Herstellung des Farbstoffes 14

| | |
|---|---|
| 2,2 g | 2-Amino-4-trifluormethyl-6-nitrophenol (Amin 6) werden in 30 ml Eisessig und 5 ml Propionsäure bei 0°C mit |
| 3 ml | Methansulfonsäure und |
| 1,45 ml | (=1,25 g) Isoamylnitrit diazotiert. Nach 40 min gibt man 0,5 g Harnstoff zu, wartet 5 min und kippt die rotgelbe Lösung zu |
| 2 g | 3-Methyl-isochinolinol-4 (Kuppler 5) und |
| 40 g | Natriumacetat in |
| 150 ml | Methanol. |

Man rührt über Nacht weiter, verdünnt mit 50 ml Wasser, stellt mit 20%iger $K_2CO_2$-Lösung auf pH = 6 und saugt ab.
Zur Reinigung chromatographiert man mit Methylenchlorid/Methanol über eine Kieselgelsäule. Ausbeute 1,58 g blaues Pulver (aus Isopropanol).
Nach dem Beispiel von Farbstoff 14 werden auch die Farbstoffe 18 und 21 hergestellt.

Herstellung des Farbstoffes 23
a) Aus dem als Zwischenprodukt bei der Herstellung von Amin 3 erhaltenen 7-Nitro-2-methylbenzoxazol-5-sulfochlorid wird durch Digerieren mit 20%igem wässrigem $NH_3$ und Nachbehandlung mit Essigsäure, die 5% HCl enthält, 2-Amino-6-nitrophenol-4-sulfonamid (Amin 2) hergestellt.
b) Man diazotiert 2,35 g Amin 2 (10 mMol) mit (1,25 g) Isoamylnitrit in

| | |
|---|---|
| 30 ml | Eisessig |
| 4 ml | Propionsäure und |
| 3 ml | Methansulfonsäure bei −5°C, |

zerstört den Überschuss an salpetriger Säure mit 0,5 g Harnstoff und rührt in eine auf −5°C gehaltene Lösung von 2,3 g Diphenylimidazol (Kuppler 9) und 10 g KOH in 150 ml Methanol ein. Durch Nachgeben von insgesamt 30 g KOH in 100 ml Methanol wird alkalisch gehalten und weitergerührt. Nach Stehen über Nacht wird mit Salzsäure auf pH = 6 gestellt und abgesaugt. Ausbeute 4,5 g Farbstoff

Durch Chromatographie über Kieselgel und Umfällen mit Dimethylformamid/Ethylacetat werden 3 g Reinsubstanz erhalten.
Farbstoff 26 wird analog hergestellt.

Farbabspalter 1

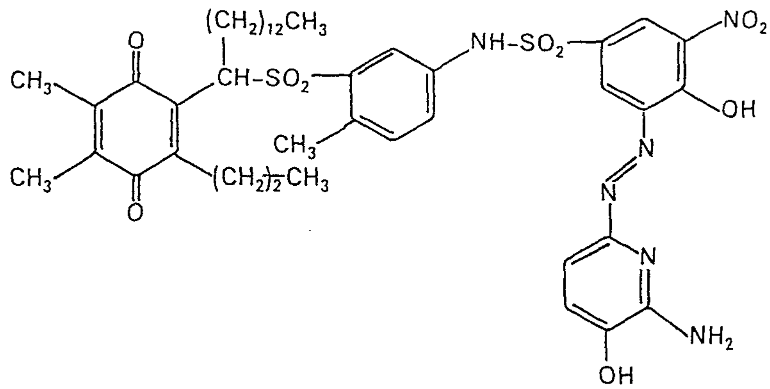

a) 2,3-Dimethyl-5-propyl-6-[α-(2-methyl-5-amino-phenyl)-sulfonyl]-tetradecyl-benzochinon-1,4

Zu 19,6 g 2,3-Dimethyl-5-propyl-6-(α-hydroxy)-tetradecylhydrochinon (dessen Herstellung in der veröffentlichten europäischen Patentanmeldung 0 004 399 beschrieben ist) und 11,1 g 2-Methyl-5-aminobenzolsulfinsäure in 300 ml Eisessig tropft man unter Rühren 30 ml 20%ige Schwefelsäure. Man hält 15 min auf 60°C, gibt 30 g Eisen-III-chloridhexahydrat zu und hält weitere 20 min auf 60°C. Man rührt in 300 ml Wasser und saugt nach eingetretener Kristallisation ab. Man wäscht mit Wasser nach, digeriert mit heissem Methanol und saugt erneut ab und trocknet im Vakuum. Ausbeute 28 g.

b) 5,2 g Chinonverbindung aus a) werden in 50 ml Pyridin bei 5–10°C mit 3,5 g 7-Nitro-2-methyl-benzoxazol-5-sulfochlorid (Zwischenprodukt bei der Herstellung von Amin 3) über 30 h umgesetzt. Anschliessend wird nach Zugabe von 5 g Eis 1 h weitergerührt und durch Eintragen in Wasser ausgefällt. Das Rohprodukt besteht nach Ausweis des Dünnschichtchromatogramms aus 2 Komponenten. Nach 3 stündiger Digestion mit 100 ml Eisessig und 2 ml $H_2SO_4$ ist der schwächer-gelb gefärbte Fleck des Dünnschichtchromatogramms verschwunden. Das Produkt wird mit 50 ml Wasser ausgefällt und durch mehrmaliges Digerieren mit Methanol in Gegenwart von wenig Pyridin und Wasser gereinigt. Ausbeute: 5,1 g orangefarbenes Pulver.

c) 5 g 2-Amino-6-nitrophenolverbindung aus b) werden in 100 ml Dioxan nach Zugabe von 2 ml Methanosulfonsäure mit 1 ml Isoamylnitrit bei 0°C diazotiert. Nach 2stündigem Stehen wird ein Überschuss an salpetriger Säure mit 1 g Harnstoff in 5 ml Methanol zerstört, die Diazoniumlösung in eine Lösung von 1,5 g 2-Aminopyridinol-3 (Kuppler 1) in 200 ml Methanol und 50 ml Pyridin, worin 40 g Kaliumcarbonat suspendiert sind, eingetragen.

Man rührt bei 5°C 4 h weiter und trägt in 300 g Eis ein. Der ausgefallene Farbabspalter ist nach zweimaligem Verrühren mit je 100 ml Methanol und Umkristallisation aus Ethylacetat/Methanol zur Verwendung bereit.
Ausbeute 4,5 g blauviolettes Pulver.

Farbabspalter 2

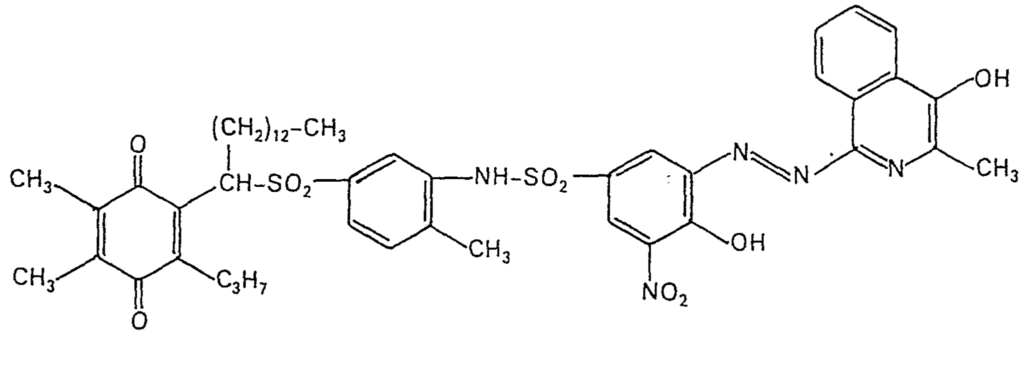

wird hergestellt durch Kupplung des unter c) hergestellten Diazoniumsalzes auf 3-Methyl-4-isochinolinol (Kuppler 5) in Methanol/Dioxan in Gegenwart von Natriumacetat; dunkelblaues Pulver.

Farbabspalter 3

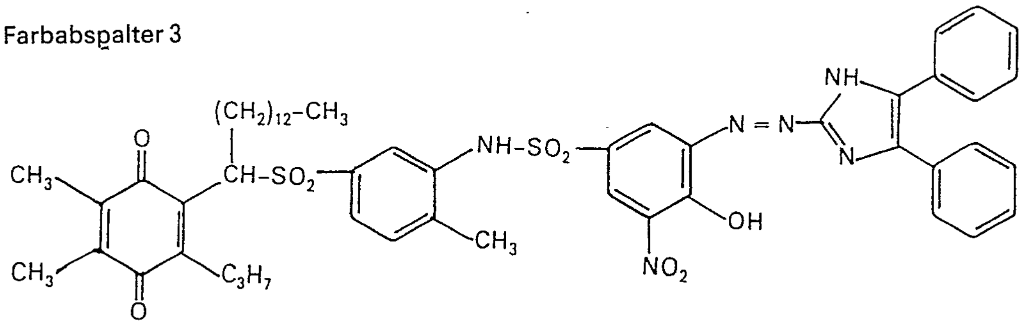

wird hergestellt durch Kupplung des unter c) hergestellten Diazoniumsalzes auf 4,5-Diphenylimidazol (Kuppler 9) in Dioxan-Pyridin.

Farbabspalter 4

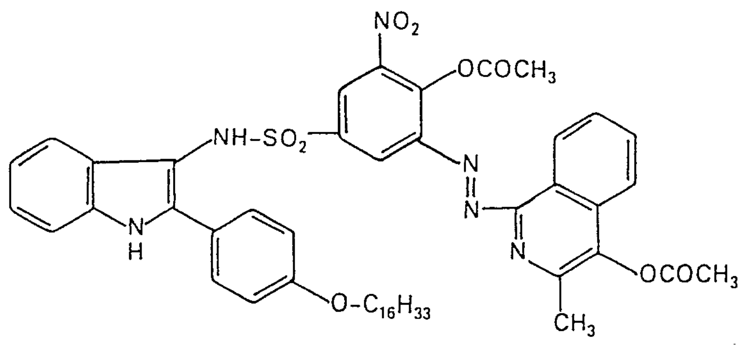

4.1 10 g Farbstoff 13 werden in 70 ml Pyridin mit 20 ml Acetanhydrid durch 2 stündiges Erhitzen am Dampfbad acetyliert.

4.2

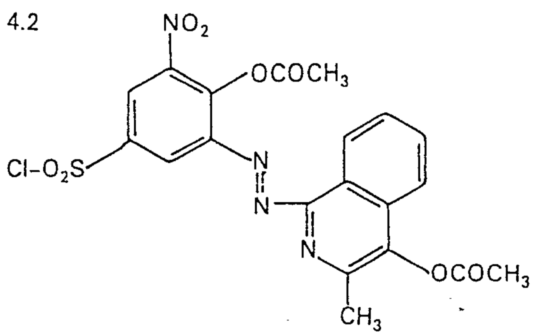

Das Rohprodukt aus 4.1 wird mit 15 g $PCl_5$ und 10 g $POCl_3$ 4 h am Dampfbad verrührt. Anschliessend wird mit 200 ml Dichlormethan verdünnt und in ein Gemisch aus 20 g $NaHCO_3$ und 80 g Eis ausgetragen. Die Dichlormethanphase wird mit Molekularsieb getrocknet und bei T <20°C im Vakuum eingedampft. Ausbeute 8,5 g.

Das Rohprodukt aus 4.2 wird unter Stickstoff in 100 ml Dichlormethan und 50 ml Pyridin mit 6,5 g 2-Cetyloxyphenyl-3-aminoindol bei Raumtemperatur umgesetzt. Nach 10-stündigem Stehen wird mit 100 ml Dichlormethan verdünnt und mit 120 ml 20%iger Salzsäure behandelt. Die wässrige Lösung wird mit Na-acetat auf pH = 3 gestellt und abgetrennt. Die Dichlormethanphase wird mit Molekularsieb getrocknet und über Kieselgel chromatographiert. Man erhält 6 g chromatographisch einheitliche Substanz in Form eines roten Pulvers.

Farbabspalter 5
Zwischenstufe

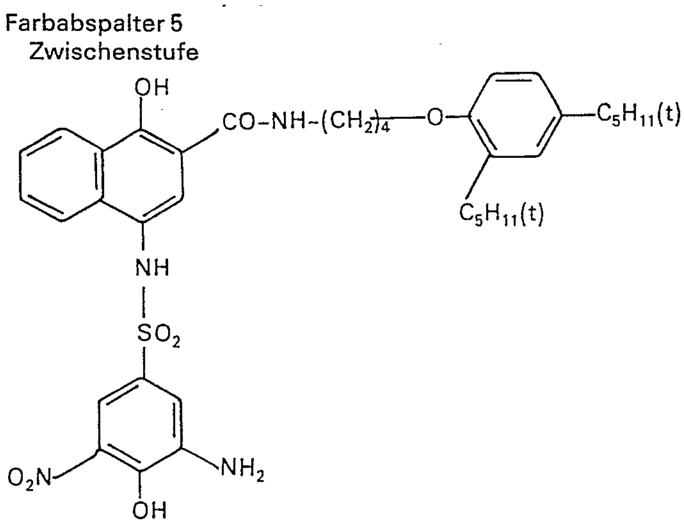

wurde durch Umsetzen des für Amin 3 als Zwischenprodukt benötigten Nitrobenzoxazolsulfonchlorids mit 4-Amino-1-hydroxy-N-[4-(2,4-di-tert.-pentylphenoxy)-butyl]-2-naphthamid (US-A-3 954 476) und vorsichtige Verseifung mit wässriger Salzsäure in Essigsäure/Chloroform 1:1 hergestellt.

Farbabspalter 5

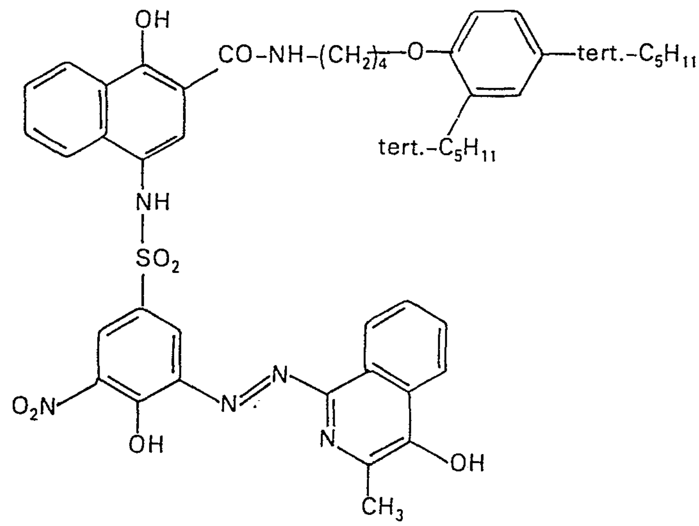

wurde in Anlehnung an das in US-A-4 148 642, Seite 27, Zeilen 20–40 beschriebene Verfahren durch Diazotierung des in der Zwischenstufe hergestellten Amins mit HCl + Methanol/Isoamylnitrit im 30-fachen Volumen Aceton und Kupplung mit 3-Methyl-4-isochinolinol nach Zugabe der mit HCl äquimolaren Menge Natriumacetat in Methanol hergestellt und durch Einrühren in Wasser isoliert. Zur Reinigung wurde unter Stickstoff zwischen Dimethylformamid und Cyclohexan verteilt und nach erneuter Fällung mit Wasser und Trocknung in Dichlormethan/Isopropanol über Kieselgel chromatographiert. Nach Eindampfen unter Stickstoff fällt Farbabspalter 5 in Form eines dünnschichtchromatographisch einheitlichen, in Ethylacetat mit blauer Farbe gut löslichen Pulvers an.

Farbabspalter 6

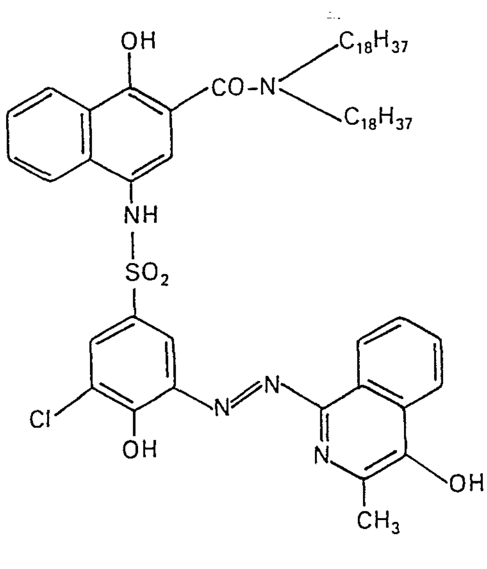

wurde wie vorstehend beschrieben durch Kupplung von 2-Chlor-6-aminophenol-4-sulfonsäure-4-hydroxy-3-bis-octadecylaminocarbonyl-naphthylamid auf 3-Methyl-4-isochinolinol hergestellt; violettes, in Ethylacetat gut lösliches Pulver.

Die erfindungsgemässen Farbabspalter werden in Zuordnung zu einer lichtempfindlichen Silberhalogenidemulsionsschicht einem farbfotografischen Aufzeichnungsmaterial für das Farbdiffusionsübertragungsverfahren einverleibt. Bei monochromatischen Verfahren enthält ein solches Aufzeichnungsmaterial mindestens eine, ein Verfahren zur Herstellung mehrfarbiger Bilder in der Regel mindestens drei lichtempfindliche Silberhalogenidemulsionsschichten, im letzteren Fall mit unterschiedlicher spektraler Empfindlichkeit, wobei erfindungsgemäss mindestens einer dieser Schichten ein Farbabspalter gemäss Formel VI zugeordnet ist. Die Farbabspalter liefern bei der Entwicklung diffusionsfähige Farbstoffe, die nach Diffusion in eine Bildempfangsschicht mit Nickel- oder Kupferionen zu blaugrünen Bildfarbstoffen komplexiert werden. Die Farbabspalter der Erfindung sind daher bevorzugt einer rotempfindlichen Silberhalogenidemulsionsschicht zugeordnet.

Unter «Zuordnung» und «zugeordnet» wird verstanden, dass die gegenseitige Anordnung von lichtempfindlicher Silberhalogenidemulsionsschicht und Farbabspalter von solcher Art ist, dass bei der Entwicklung eine Wechselwirkung zwischen ihnen möglich ist, die eine Freisetzung des diffusionsfähigen durch Metallionen komplexierbaren Azofarbstoffes als Funktion der Entwicklung der Silberhalogenidemulsionsschicht zulässt. Hierzu müssen das lichtempfindliche Silberhalogenid und der Farbabspalter nicht notwendigerweise in derselben Schicht vorliegen; sie können auch in benachbarten Schichten

untergebracht sein, die jeweils der gleichen Schichteinheit angehören.

Falls es sich bei den erfindungsgemässen Farbabspaltern um reduzierbare, reduktiv spaltbare Verbindungen handelt, die zweckmässig gemeinsam mit ED-Verbindungen (oder deren Vorläufer, z.B. gemäss der DE-A-30 06 268) verwendet wurden, ist unter Zuordnung zu verstehen, dass die gegenseitige Anordnung von Silberhalogenidemulsionen ED-Verbindung bzw. ED-Vorläuferverbindung und Farbabspalter von solcher Art ist, dass eine Wechselwirkung zwischen ihnen möglich ist, die eine bildmässige Übereinstimmung zwischen dem gebildeten Silberbild und dem Verbrauch an ED-Verbindung einerseits sowie zwischen der nicht verbrauchten ED-Verbindung und dem Farbabspalter andererseits zulässt, so dass in Übereinstimmung mit dem nicht entwikkelten Silberhalogenid eine bildweise Verteilung von diffusionsfähigem Farbstoff erzeugt wird.

Obwohl für die Einarbeitung der erfindungsgemässen Farbabspalter die verschiedensten Methoden in Frage kommen, hat es sich als günstig erwiesen, die Farbabspalter der vorliegenden Erfindung in Form von Emulgaten unter Verwendung von sogenannten Ölbildnern in die Schichten einzuverleiben. Insbesondere bei Verwendung von reduzierbaren, reduktiv spaltbaren Farbabspaltern in Kombination mit ED-Verbindungen bietet dies den Vorteil, dass Farbabspalter und ED-Verbindungen in Form eines gemeinsamen Emulgates in besonders engen funktionellen Kontakt gebracht werden können. Geeignete Ölbildner sind beispielsweise beschrieben in US-A-2 322 027, DE-A-1 772 192, DE-A-2 042 659 und DE-A-2 049 689. Die optimalen Mengen des einzuarbeitenden Farbabspalters und gegebenenfalls der ED-Verbindung können durch einfache routinemässige Tests ermittelt werden. Der Farbabspalter der vorliegenden Erfindung wird beispielsweise in Mengen von 0,05–0,2 Mol und die ED-Verbindung, falls vorhanden, in Mengen von 0,1–0,6 Mol pro Mol Silberhalogenid verwendet.

Die Entwicklung des bildmässig belichteten erfindungsgemässen farbfotografischen Aufzeichnungsmaterials wird durch Behandlung mit einer wässrig-alkalischen, gegebenenfalls hochviskosen Entwicklerlösung eingeleitet. Die für die Entwicklung erforderlichen Hilfsentwicklerverbindungen sind entweder in der Entwicklerlösung enthalten oder können ganz oder teilweise auch in einer oder mehreren Schichten des erfindungsgemässen farbfotografischen Aufzeichnungsmaterials enthalten sein. Bei der Entwicklung werden aus den Farbabspaltern bildmässig diffusionsfähige Farbstoffe freigesetzt und auf eine Bildempfangsschicht übertragen, die entweder integraler Bestandteil des erfindungsgemässen farbfotografischen Aufzeichnungsmaterials ist oder sich mit jenem zumindest während der Entwicklungszeit in Kontakt befindet. Die Bildempfangsschicht kann demnach auf dem gleichen Schichtträger angeordnet sein wie das lichtempfindliche Element oder auf einem separaten Schichtträger.

Sie besteht im wesentlichen aus einem Bindemittel, das Beizmittel für die Festlegung der aus den nicht-diffundierenden Farbabspaltern freigesetzten diffusionsfähigen Farbstoffe enthält. Als Beizmittel für anionische Farbstoffe dienen vorzugsweise langkettige quaternäre Ammonium- oder Phosphoniumverbindungen oder tertiäre Sulfoniumverbindungen, z.B. solche, wie sie beschrieben sind in US-A-3 721 147 und US-A-3 271 148. Ferner können auch bestimmte Metallsalze und deren Hydroxide, die mit den sauren Farbstoffen schwerlösliche Verbindungen bilden, verwandt werden. Weiterhin sind hier auch polymere Beizmittel zu erwähnen, wie etwa solche, die in DE-A-2 315 304, DE-A-2 631 521 oder DE-A-29 41 818 beschrieben sind. Die Farbstoffbeizmittel sind in der Beizmittelschicht in einem der üblichen hydrophilen Bindemittel dispergiert, z.B. in Gelatine, Polyvinylpyrrolidon, ganz oder partiell hydrolysierten Celluloseestern. Selbstverständlich können auch manche Bindemittel als Beizmittel fungieren, die Copolymerisate von stickstoffhaltigen quaternären Basen darstellen, z.B. Polymerisate von N-Methyl-2-vinylpyridin, wie beispielsweise beschrieben in US-A-2 484 430. Weitere brauchbare beizende Bindemittel sind beispielsweise Guanylhydrazonderivate von Alkylvinylketonpolymerisaten, wie beispielsweise beschrieben in der US-A-2 882 156, oder Guanylhydrazonderivate von Acylstyrol-polymerisaten, wie beispielsweise beschrieben in der DE-A-2 009 498. Im allgemeinen wird man jedoch den zuletzt genannten beizenden Bindemitteln andere Bindemittel, z.B. Gelatine, zusetzen.

Darüber hinaus kann im vorliegenden Fall die Bildempfangsschicht oder eine hierzu benachbarte Schicht Schwermetallionen, insbesondere Kupfer- oder Nickelionen enthalten, die mit den eindiffundierenden Tridentat-Azofarbstoffen der Erfindung die entsprechenden Azofarbstoff-Metall-Komplexe bilden mit den erwähnten vorteilhaften Eigenschaften hinsichtlich Absorption und Stabilität. Die Metallionen können in der Bildempfangsschicht in komplex gebundener Form vorliegen, z.B. gebunden an bestimmte Polymerisate wie etwa beschrieben in Research Disclosure 18 534 (Sept. 1979) oder in der DE-A-30 02 287. Es ist aber auch möglich die Azofarbstoff-Metall-Komplexe nach erfolgter Diffusion in der Bildempfangsschicht dadurch zu erzeugen, dass die Bildempfangsschicht mit der darin entstandenen bildmässigen Verteilung an erfindungsgemässen Farbstoffen mit einer Lösung eines Salzes eines der genannten Schwermetalle behandelt wird. In jedem Fall besteht das mit dem erfindungsgemässen farbfotografischen Material erzeugte Farbbild aus einer bildmässigen Verteilung von Metallkomplexen, insbesondere von Nickel- oder Kupferkomplexen des aus den erfindungsgemässen Farbabspaltern freigesetzten Azofarbstoffes der Formel II sowie gegebenenfalls weiterer Farbstoffe, die in der Bildempfangsschicht mittels der darin enthaltenen Beizmittel festgelegt sind.

Sofern die Bildempfangsschicht auch nach

vollendeter Entwicklung in Schichtkontakt mit dem lichtempfindlichen Element verbleibt, befindet sich zwischen ihnen in der Regel eine alkalidurchlässige pigmenthaltige lichtreflektierende Bindemittelschicht, die der optischen Trennung zwischen Negativ und Positiv und als optisch ansprechender Bildhintergrund für das übertragene Farbbild dient. Eine solche lichtreflektierende Schicht kann in bekannter Weise bereits in dem lichtempfindlichen farbfotografischen Aufzeichnungsmaterial vorgebildet sein oder aber in ebenfalls bekannter Weise erst bei der Entwicklung erzeugt werden. Falls die Bildempfangsschicht zwischen Schichtträger und lichtempfindlichem Element angeordnet ist und von letzterem durch eine vorgebildete lichtreflektierende Schicht getrennt ist, muss entweder der Schichtträger transparent sein, so dass das erzeugte Farbübertragsbild durch ihn hindurch betrachtet werden kann, oder das lichtempfindliche Element muss mitsamt der lichtreflektierenden Schicht von der Bildempfangsschicht entfernt werden, um letztere freizulegen. Die Bildempfangsschicht kann aber auch als oberste Schicht in einem integralen farbfotografischen Aufzeichnungsmaterial vorhanden sein, in welch letzterem Fall die Belichtung zweckmässigerweise durch den transparenten Schichtträger vorgenommen wird.

Anwendungsbeispiel 1

Bildempfangsblatt 1

Auf einen beidseitig mit Polyethylen beschichteten und mit Haftschicht versehenen Papierträger wurden folgende Schichten aufgetragen. Die Angaben beziehen sich auf 1 $m^2$.

1. Eine Beizschicht mit 6 g eines Polyurethans gemäss Beispiel 3 der DE-A-2 631 521 und 5 g Gelatine.

2. Eine Härtungsschicht mit 0,1 g Gelatine und 0,15 g eines Soforthärtungsmittels der Formel

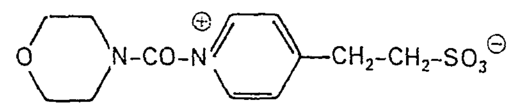

Je 1 Streifen des Bildempfangsmaterials wurde in eine 0,003 molare, mit 2% NaOH alkalisch gestellte Lösung eines der erfindungsgemässen Farbstoffe 1, 2, 4, 5, 10, 11, 12, 13, 14, 16, 18, 22, 23, 26 bzw. eines der nachfolgend beschriebenen nicht erfindungsgemässen Vergleichsfarbstoffe A, B, C, D, E und F eingetaucht und zu einer Dichte von 1–1,2 (gemessen am Reflexionsdensitometer Macbeth RD 514 hinter Grünfilter) eingefärbt:

Nicht erfindungsgemässe Vergleichsfarbstoffe:

A

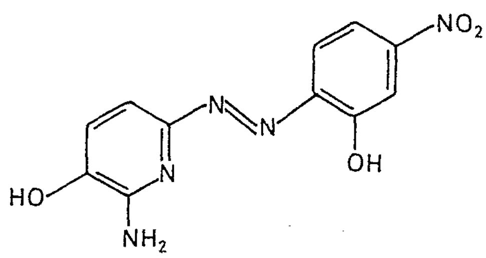

DE-A-2 740 719

B

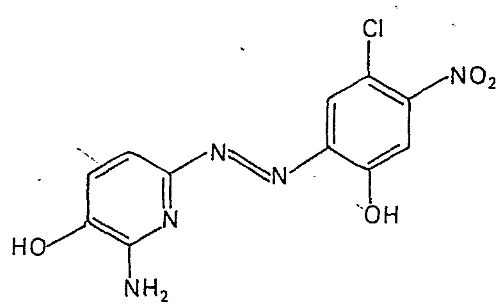

C

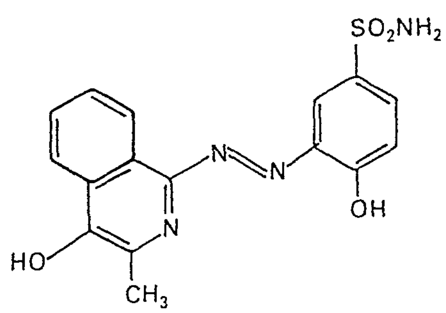

DE-A-2 740 719

D

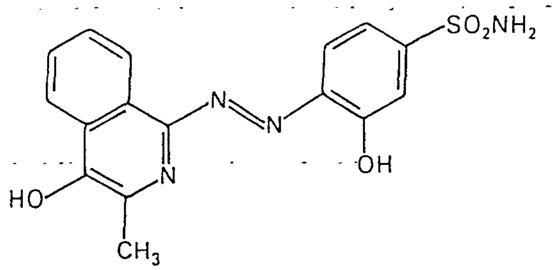

E

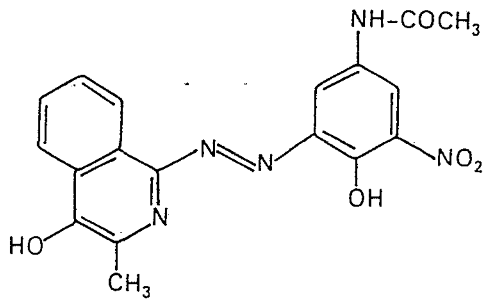

F

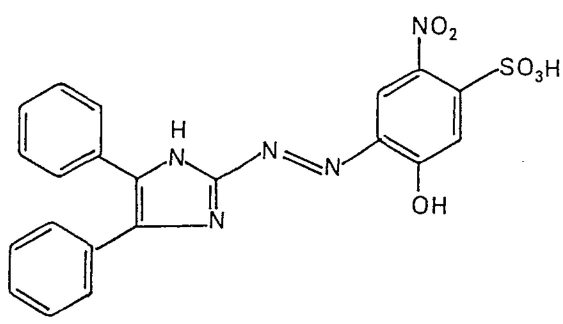

Nach beendeter Tauchbehandlung werden die Proben mit demineralisiertem Wasser gespült und durch Eintauchen in eine 2%ige Metallsalzlösung 5 s lang metallisiert:

Farbstoffe 1, 2, 4, 5, 10, 11, 12, 13, 14, 16, 18 und 22, A, B, C, D und E werden mit Nickelacetatlösung,
Farbstoffe 11 13, 16, 23, 26, A, C, D und F werden mit Kupferacetatlösung behandelt.

Alle Proben werden danach unter fliessendem Wasser gespült, mit einer 2%igen Bernsteinsäure-Pufferlösung (auf pH = 6 gestellt) nachbehandelt und getrocknet.

Nachstehend sind die Ergebnisse der spektralen Messungen zusammengefasst:

Tabelle 1: Nickelkomplexe

| Farbstoff | $\lambda_{max}$ [nm] | Halbbandbreite [nm] | Nebendichten hinter | | Farbeindruck | |
|---|---|---|---|---|---|---|
| | | | Blaufilter (Macbeth RD 514) | Grünfilter | | |
| 1 | 638 | 544–678 | 23% | 45% | b | K |
| 2 | 631 | 542–674 | 24% | 48% | b | K |
| 4 | 630 | 544–670 | 30% | 50% | b | K |
| 5 | 624 | 534–666 | 28% | 51% | b | K |
| 10 | 650 | 562–690 | 19% | 33% | bg | K |
| 11 | 650 | 562–680 | 18% | 34% | bg | K |
| 12 | 675 | 570–705 | 19% | 32% | gbg | SK |
| 13 | 670 | 566–719 | 19% | 29% | gbg | SK |

Tabelle 1 (Fortsetzung)

| Farbstoff | $\lambda_{max}$ [nm] | Halbbandbreite [nm] | Nebendichten hinter Blaufilter (Macbeth RD 514) | Nebendichten hinter Grünfilter (Macbeth RD 514) | Farbeindruck | |
|---|---|---|---|---|---|---|
| 14 | 665 | 562-688 | 21% | 33% | gbg | K |
| 16 | 648 | 555-694 | 18% | 34% | bg | SK |
| 18 | 655 | 558-690 | 18% | 35% | bg | K |
| 22 | 675 | 560->730 | 20% | 35% | bg | K |
| A | 654 | 536-714 | 56% | 58% | bg | St |
| B | 620 | 544-706 | | | b | St |
| C | 648 | 557-684 | 23% | 38% | b | K |
| D | 655 | 556-690 | 31% | 39% | b | T |
| E | 668 | 573->730 | 35% | 38% | gbg | T |

Der Farbeindruck wird wie folgt beurteilt:
b: visuell zu blau
bg: reines blaugrün
gbg: grünliches blaugrün
K: klar
SK: sehr klar
T: trübe
St: ausgesprochen stumpf

Tabelle 2: Kupferkomplexe

| Farbstoff | $\lambda_{max}$ [nm] | Halbbandbreite [nm] | Nebendichten hinter Blaufilter (Macbeth RD 514) | Nebendichten hinter Grünfilter (Macbeth RD 514) | Farbeindruck | |
|---|---|---|---|---|---|---|
| 11 | 650 | 562-710 | 27% | 35% | bg | K |
| 13 | 665 | 565-710 | 28% | 42% | bg | K |
| 16 | 640 | 560-690 | 26% | 41% | bg | K |
| 23 | 626 | 543-695 | 27% | 48% | bg | K |
| 26 | 640 | 540->720 | 33% | 45% | bg | T |
| A | 660 | 520->700 | - | - | bg | St |
| C | 650 | 555-680 | 20% | 38% | bg | K |
| D | 660 | 555-710 | 30% | 40% | bg | T |
| E | 645 | 529-710 | 33% | 51% | bg | St |

Die Ergebnisse sowohl der visuellen Beurteilung als auch der Messung aller Spektraldaten zeigen, dass Farbstoffe mit dem erfindungsgemässen Substitutionsmuster im Phenylteil (=Diazoteil) bei der Metallisierung mit Nickel überlegen klare Nuancen geben und dass eine bessere Klarheit der Nuance auch bei den Kupferkomplexen zu erkennen ist. Die Nebendichten liegen sowohl bei den dem Stand der Technik entsprechenden Farbstoffen als auch bei neuen Farbstoffen mit vom erfindungsgemässen Muster abweichender Substitution generell höher.

Anwendungsbeispiel 2

Bildempfangsblatt 2

Auf einen beidseitig mit Polyethylen beschichteten und mit einer Haftschicht versehenen Papierträger wurden folgende Schichten aufgetragen (Angaben beziehen sich auf 1 m²).

1. Eine Metallspenderschicht, enthaltend 1,5 g Nickelacetat und 0,8 g Gelatine,
2. eine Beizschicht enthaltend 5 g Polyvinyllimidazol-acetat und 5 g Gelatine,
3. eine Härtungsschicht, enthaltend 0,1 g Gelatine und 0,15 g eines Soforthärtungsmittels der Formel

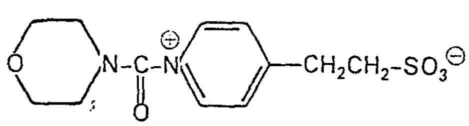

Je 1 Streifen des Bildempfangsmaterials wurde in eine 0,003 molare und mit 2% NaOH alkalisch gestellte Lösung eines der in der nachfolgenden Tabelle aufgeführten Farbstoffe eingetaucht und zu einer Dichte von 1,2-1,5 (gemessen hinter Rotfilter an Reflexionsdensitometer Macbeth RD 514) eingefärbt. Anschliessend werden die Farbüberträge mit 2%igem Bernsteinsäurepuffer (pH = 6) nachbehandelt und getrocknet.

Tabelle 3

| Farbstoff | $\lambda_{max}$ | Halbbandbreite | Nebendichten hinter | | Farbeindruck | |
|---|---|---|---|---|---|---|
| | | | Blaufilter | Grünfilter | | |
| 1 | 625 | 530–685 | 32% | 40% | b | t |
| 2 | 620 | 530–695 | 33% | | b | t |
| 4 | 628 | 530–680 | – | | b | t |
| 11 | 635 | 550–680 | 28% | 38% | b | k |
| 12 | 655 | 568–700 | 32% | 42% | bg | k |
| 13 | 657 | 560–710 | 32% | | bg | k |
| A | 640 | 500–>730 | 54% | 54% | bg | st |
| C | 626 | 544–670 | 34% | 48% | b | t |
| D | 635 | 544–700 | 38% | 50% | bg | st |

Farbeindrücke: siehe Tabelle Beispiel 1

Alle Farbüberträge auf der dem Stand der Technik (veröffentlichte europäische Patentanmeldung 4911) entsprechenden metallisierenden Bildempfangsschicht 2 wirken blauer und stumpfer als auf Bildempfangsschicht 1 (bräunliche Grundanfärbung, dazu kurzwellige Verschiebung der Absorptionsmaxima). Die Qualitätsunterschiede zwischen erfindungsgemässen Farbstoffen und Farbstoffen, die dem Stand der Technik entsprechen, treten trotzdem deutlich hervor.

Anwendungsbeispiel 3
Lichtempfindliches Element 1 (nicht erfindungsgemäss)

Auf einen beidseitig mit Polyethylen beschichteten Papierträger wurden nacheinander folgende Schichten aufgetragen. Alle Angabe beziehen sich auf 1 m².

1. Eine rotsensibilisierte Silberbromidiodidemulsionsschicht aus 0,5 g $AgNO_3$ mit 0,3 g des nicht erfindungsgemässen Farbabspalters A (= Verbindung 2 aus DE-A-2 854 946), 0,16 g ED-Verbindung 6 (=Verbindung 4 aus DE-A-30 06 268), 0,46 g Palmitinsäurediethylamid (gemeinsamer Ölbildner für A und B) und 1,15 g Gelatine.

2. Eine Schutzschicht mit 0,6 g Monoacetylierungsprodukt von 4-Methyl-4-hydroxymethylphenidon, 0,12 g 2-Isooctadecyl-5-sulfohydrochinon und 0,6 Gelatine.

3. Eine Härtungsschicht mit 0,1 g Gelatine und 0,12 g Soforthärtungsmittel s. Beispiel 1.

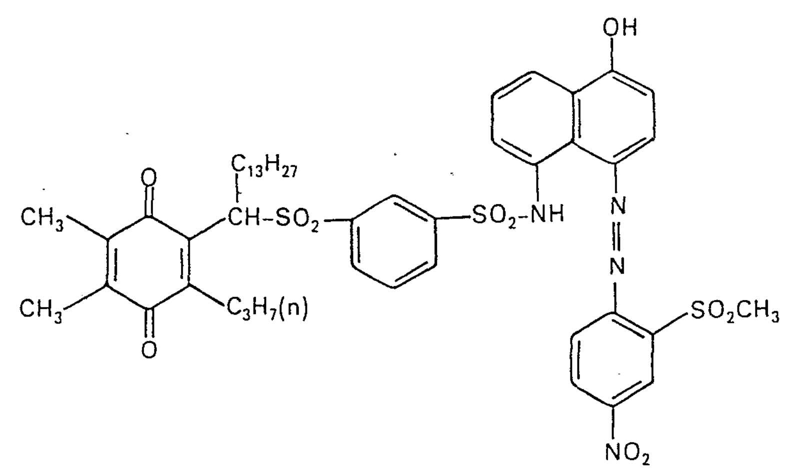

Farbabspalter A

Bildempfangsblatt 1, bestehend aus

1. Beizschicht mit 6 g eines Polyurethans gemäss Beispiel 3 der DE-A-2 631 521 und 5 g Gelatine.

2. Härtungsschicht mit 0,1 g Gelatine und 0,15 g Härtungsmittel C.

Das bildmässig durch einen Stufenkeil belichtete lichtempfindliche Element und das Bildempfangsblatt wurden mit einer Behandlungslösung der nachfolgend angegebenen Zusammensetzung getränkt und schichtseitig zusammengepresst:

925 g $H_2O$
30 g Isobutanol
2 g $Na_2SO_3$
3 g KBr
40 g KOH

Nach einer Kontaktzeit von 2 Minuten wurden die Blätter voneinander getrennt und das Bildempfangsblatt 30 Sekunden gewässert. Nach der Trocknung wurden die Dmin/Dmax-Werte des positiven blaugrünen Bildes gemessen.

Lichtempfindliches Element 2-4: (erfindungsgemäss)

Die lichtempfindlichen Elemente 2-4 unterscheiden sich von Element 1 insofern, als

lichtempfindliches Element 2:
0,4 g Farbabspalter 1, 0,2 g ED-Verbindung 6,
lichtempfindliches Element 3:
0,4 g Farbabspalter 2, 0,25 g ED-Verbindung 6 und
lichtempfindliches Element 4:
0,45 g Farbabspalter 3, 0,25 g ED-Verbindung 6 enthalten.

Ausserdem enthielten die Emulgate anstelle von 0,46 g Palmitinsäurediethylamid jeweils 0,9 g Palmitinsäurediethylamid. Die Verarbeitung erfolgte wie im Fall des lichtempfindlichen Elements 1 im Kontakt mit Bildempfangsschicht 1. Nach dem Trennen werden die Bildempfangsschichten mit demineralisiertem Wasser abgespült und durch Eintauchen in 2%ige Nickelacetatlösung (für lichtempfindliches Element 2 und 3) bzw. 2%ige Kupferacetatlösung (für lichtempfindliches Element 4) metallisiert. Anschliessend werden sie durch ein Bernsteinsäurepufferbad (2% Bernsteinsäure, auf pH 0 6 gestellt) neutralisiert und getrocknet.

Die erhaltenen Farbkeile 1-4 werden halbseitig abgedeckt einer 48 h dauernden Xenonlichtbogen-Belichtung ausgesetzt (4,8.10⁶ 1×h).

Die erhaltenen Daten sind in der nachfolgenden Tabelle zusammengefasst:

| Lichtempfindliches Element | Farbabspalter | $D_{min}$ | $D_{max}$ | E | $\frac{\Delta D}{D_o}$ |
|---|---|---|---|---|---|
| 1 | A | 0,2 | 2,05 | 100 | −80% |
| 2 | 1 | 0,2 | 1,9 | 85 | −15% |
| 3 | 2 | 0,18 | 2,0 | 80 | −30% |
| 4 | 3 | 0,22 | | 100 | −15% |

In der 5. Spalte ist die Empfindlichkeit E in relativen log I.t-Einheiten angegeben.
In der 6. Spalte ist die prozentuale Dichteabnahme bei Bestrahlung mit Xenonlicht ($4{,}8.10^6$ 1×h) angegeben.

Anwendungsbeispiel 4

Die lichtempfindlichen Elemente 5-7 wurden dadurch hergestellt, dass auf einen transparenten Polyesterträger nacheinander folgende Schichten aufgetragen wurden (Mengenangaben auf 1 $m^2$).

1. Metallspenderschicht, enthaltend 2 g Nikkelpentadecenylsuccinat und 2,5 g Gelatine.
2. Beizschicht, enthaltend 2,5 g kationisches Polyurethan nach Beispiel 3 der DE-A-2 631 521 und 3 g Gelatine.
3. Reflektionsschicht, enthaltend 18 g $TiO_2$ und 1,8 g Gelatine.
4. Farbabspalterschicht, enthaltend

4.1. lichtempfindliches Element 5: 0,5 g Farbabspalter 4, 0,05 g octadecylhydrochinonsulfonsaures Kalium, 0,5 g Gelatine

4.2. lichtempfindliches Element 6: 0,5 g Farbabspalter 5, 0,05 g octadecylhydrochinonsulfonsaures Kalium, 0,5 g Gelatine

4.3. lichtempfindliches Element 7: 0,5 g Farbabspalter 7, 0,05 g octadecylhydrochinonsulfonsaures Kalium, 0,05 g Gelatine.

5. Eine rotsensibilisierte unverschleierte Direktpositivemulsion mit 1,3 µm grossen octaedrischen Silberbromidkristallen mit einem Auftrag von 1,5 g $AgNO_3$, 0,003 g Schleiermittel der Struktur:

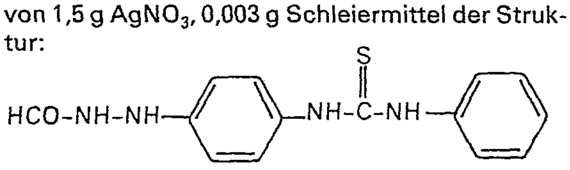

und 1,4 g Gelatine.

6. Eine Härtungsschicht, enthaltend 0,6 g Gelatine und 0,2 g Soforthärtungsmittel nach Anwendungsbeispiel 1.

Je ein Streifen der lichtempfindlichen Elemente 5, 6 und 7 wurde hinter einem Stufenkeil belichtet und in Verbindung mit einem Pastenbeutel, einem Neutralisationsblatt und zwei seitlich angeordneten Abstandshalterstreifen mit 140 µm Stärke durch ein Quetschwalzenpaar geführt.

Nach 10 min bei 25°C wurde das Element abgetrennt und durch Abspülen von der anhaftenden Paste befreit.

Der Pastenentwickler war wie folgt zusammengesetzt:

1,6 g Natriumsulfit
2,8 g 5-Methylbenzotriazol
8,4 g Hydroxymethylmethylphenidon
0,3 g tert.-Butylhydrochinon
0,2 g Methylhydrochinon
1,0 g Cyclohexanol
40,0 g Carboxymethylcellulose
47,0 g Kaliumhydroxid
5,0 g Kaliumfluorid
Wasser auf 1000 g.

Man erhält 3 positive blaugrüne Farbstoffbilder mit folgenden sensitometrischen Daten.

| Lichtempfindliches Element | $D_{max}$ | $D_{min}$ | log I.t |
|---|---|---|---|
| 5 | 1,65 | 0,18 | 85 |
| 6 | 1,55 | 0,20 | 90 |
| 7 | 1,70 | 0,15 | 100 |

**Patentansprüche**

1. Farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung enthält, aus der unter den Bedingungen der alkalischen Entwicklung als Funktion der Entwicklung der Silberhalogenidemulsionsschicht ein diffusionsfähiger durch Metallionen komplexierbarer Azofarbstoff freigesetzt wird, dadurch gekennzeichnet, dass der Azofarbstoff der folgenden Formel II entspricht:

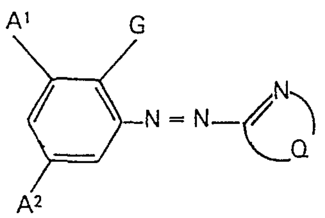

worin bedeuten
$A^1$ und $A^2$ elektronegative Substituenten, für deren meta-sigma-Werte $\sigma_m$ (nach D.H. McDaniel und H.C. Brown in J. Org. Chem. 23, 420 ff (1958)) mindestens eine der folgenden drei Beziehungen gilt:
1. $\sigma_m(A^1), \sigma_m(A^2) \geqslant +0.33$:
2. $\sigma_m(A^1) + \sigma_m(A^2) \geqslant +0.75$;
3. $\sigma_m(A^1) \geqslant +0.33$ und

$A^2 = -SO_2X$, wobei X für H, -OH, $-NH_2$, -NH-Y oder eine cyclische Aminogruppe und
Y für Alkyl, Aryl, Alkylsulfonyl, Arylsulfonyl oder Acyl steht;
Q einen Rest zur Vervollständigung eines 2-Amino-3-hydroxypyridinringes, eines 4,5-Diarylimidazolringes oder eines über die 1-Stellung verknüpften 4-Hydroxyisochinolinringes; und
G eine zur Chelatbildung befähigte Gruppe.

2. Aufzeichnungsmaterial nach Anspruch 1, dadurch gekennzeichnet, dass $A^1$ und $A^2$ bedeuten:

Halogen, $-NO_2$, -CN, $-CF_3$, $-OCF_3$,
-CO-R (R = H, Alkyl, Aryl),
-COOR ($R_2$ = Alkyl),
$-CO-NR^1R^2$ ($R^1$ = H, Alkyl, Aryl; $R^2$ = H, Alkyl; oder $R^1$ und $R^2$ = Reste zum Vervollständigen einer cyclischen Aminogruppe),
$-SO_2-R$ (R = Alkyl, Aryl),
$-SO_2-NR^1R^2$ (R = H, Alkyl, Aralkyl, Aryl; $R^2$ = H, Alkyl; oder $R^1$ und $R^2$ = Reste zum Vervollständigen einer gegebenenfalls ein weiteres Heteroatom enthaltenden 5- bis 7-gliedrigen cyclischen Aminogruppe)

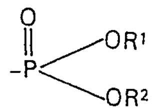

($R^1$, $R^2$ = Alkyl; oder $R^1$ und $R^2$ = 1,2- oder 1,3-Alkylen)

wobei alle Alkylreste R, $R^1$ und $R^2$ 1 bis 4 C-Atome enthalten.

3. Aufzeichnungsmaterial nach Anspruch 1 oder 2, dadurch gekennzeichnet, dass $A^2$ eine Sulfamoylgruppe, eine Sulfogruppe oder eine Disulfimidgruppe

$-SO_2-NH-SO_2-R^3$ bedeutet,

Worin $R^3$ für Alkyl oder Aryl steht.

4. Aufzeichnungsmaterial nach Anspruch 3, dadurch gekennzeichnet, dass $A^2$ eine Gruppe der folgenden Formel bedeutet:

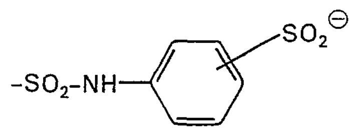

5. Aufzeichnungsmaterial nach einem der Ansprüche 1 bis 4, dadurch gekennzeichnet, dass G eine Hydroxylgruppe bedeutet.

6. Fotografisch hergestelltes Farbbild, bestehend aus einer auf einem Schichtträger angeordneten Bildempfangsschicht mit einer kationischen Beize und einer darin enthaltenen bildmässigen Verteilung eines blaugrünen Bildfarbstoffes, dadurch gekennzeichnet, dass als Bildfarbstoff ein Kupfer- oder Nickelkomplex eines Azofarbstoffes der folgenden Formel enthalten ist:

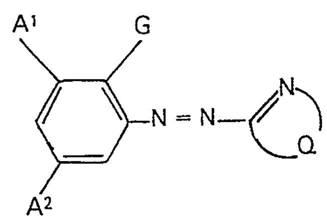

worin
$A^1$ und $A^2$ elektronegative Substituenten, für deren meta-sigma-Werte $\sigma_m$ (nach D.H. McDaniel und H.C. Brown in J. Org. Chem. 23, 420 ff (1958)) mindestens eine der folgenden drei Beziehungen gilt:
1. $\sigma_m(A^1), \sigma_m(A^2) \geqslant +0.33$
2. $\sigma_m(A^1) + \sigma_m(A^2) \geqslant +0.75$
3. $\sigma_m(A^1) \geqslant +0.33$; $A^2 = SO_2-X$ wobei
X für H, -OH, $-NH_2$, -NH-Y oder eine cyclische Aminogruppe und
Y für Alkyl, Aryl, Alkylsulfonyl, Arylsulfonyl oder Acyl steht;
Q einen Rest zur Vervollständigung eines 2-Amino-3-hydroxypyridinringes, eines 4,5-Diarylimidazolringes oder eines über die 1-Stellung verknüpftes 4-Hydroxyisochinolinringes;
G eine zur Chelatbildung befähigte Gruppe.

7. Farbbild nach Anspruch 6, dadurch gekennzeichnet, dass $A^1$ und $A^2$ bedeuten:

Halogen, $-NO_2$, -CN, $-CF_3$, $-OCF_3$,
-CO-R (R = H, Alkyl, Aryl),
-COOR (R = Alkyl),
$-CO-NR^1R^2$ ($R^1$ = H, Alkyl, Aryl; $R^2$ = H, Alkyl; oder $R^1$ und $R^2$ = Reste zum Vervollständigen einer cyclischen Aminogruppe),
$-SO_2-R$ (R = Alkyl, Aryl),
$-SO_2-NR^1R^2$ (R = H, Alkyl, Aralkyl, Aryl; $R^2$ = H, Alkyl; oder $R^1$ und $R^2$ = Reste zum Vervollständigen einer gegebenenfalls ein weiteres Heteroatom enthaltenden 5- bis 7-gliedrigen cyclischen Aminogruppe)

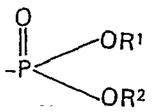 ($R^1$, $R^2$ = Alkyl; oder $R^1$ und $R^2$ = 1,2- oder 1,3-Alkylen)

wobei alle Alkylreste R, $R^1$ und $R^2$ 1 bis 4 C-Atome enthalten.

8. Farbbild nach Anspruch 6 oder 7, dadurch gekennzeichnet, dass $A^2$ eine Sulfamoylgruppe, eine Sulfogruppe oder eine Disulfimidgruppe bedeutet.

9. Farbbild nach Anspruch 8, dadurch gekennzeichnet, dass $A^2$ eine Gruppe der folgenden Formel bedeutet:

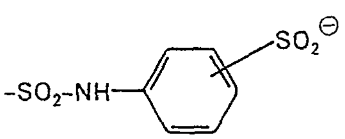

10. Durch Metallionen komplexierbarer Azofarbstoff der Formel

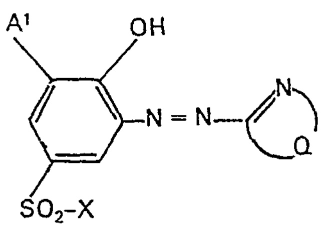

worin bedeuten
Q einen Rest zur Vervollständigung eines 4-Hydroxy-1-isochinolinringes bedeutet;
$A^1$ Cl, $-NO_2$, -CN oder $CF_3$ und
X H, -OH, $-NH_2$ -NH-Y oder eine cyclische Aminogruppe, wobei Y für Alkyl, Aryl, Alkylsulfonyl, Arylsulfonyl oder Acyl steht.

**Claims**

1. Colour photographic recording material for the production of colour images by the dye diffusion tansfer process, containing, associated with at least 1 light sensitive silver halide emulsion layer, a non-diffusible, colour providing compound from which a diffusible azo dye capable of complex formation by means of metal ions is released as a function of the development of the silver halide emulsion layer under the conditions of the alkaline development, characterised in that the azo dye corresponds to the following formula II:

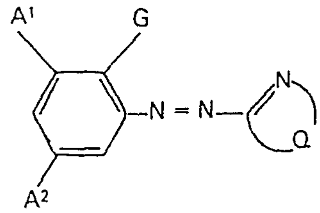

wherein
$A^1$ and $A^2$ represent electronegative substituents for whose meta sigma values $\sigma_m$ (according to D.H. McDaniel and H.C. Brown in J. Org. Chem. 23, 420 et seq (1958)) at least one of the following three relationships applies:
1. $\sigma_m(A^1), \sigma_m(A^2) \geqslant +0.33$:
2. $\sigma_m(A^1) + \sigma(A^2) \geqslant +0.75$;
3. $\sigma_m(A^1) \geqslant +0.33$ and
$A^2 = SO_2X$ wherein X represents H, -OH, $-NH_2$, -NH-Y or a cyclic amino group and
Y represents alkyl, aryl, alkyl-sulphonyl, aryl sulphonyl or acyl;
Q represents a group for the completion of a 2-amino-3-hydroxy pyridine ring, of a 4,5-diaryl imidazole ring or of a 4-hydroxy-isoquinoline ring which is linked through the 1-position; and
G represents a group capable of chelate formation.

2. Recording material according to Claim 1, characterised in that $A^1$ and $A^2$ have the following meaning:

Halogen, $NO_2$, -CN, $-CF_3$, $-OCF_3$,
-CO-R (R = H, alkyl, aryl),
-COOR (R = alkyl),
$-CO-NR^1R^2$ ($R^1$ = H, alkyl, aryl; $R^2$ = H, alkyl;
or $R^1$ and $R^2$ = groups for completing a cyclic amino group),
$-SO_2-R$ (R = Alkyl, aryl),
$-SO_2-NR^1R^2$ (R = H, alkyl, aralkyl, aryl; $R^2$ = H, alkyl; or $R^1$ and $R^2$ = groups for completing a 5-membered to 7-membered cyclic amino group optionally containing a further hetero atom),

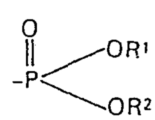

($R^1$, $R^2$ = alkyl; or $R^1$ and $R^2$ = 1,2- or 1,3-alkylene), all the alkyl groups R, $R^1$ and $R^2$ containing from 1 to 4 carbon atoms.

3. Recording material according to Claim 1 or Claim 2, characterised in that $A^2$ represents a sulphamoyl group, a sulpho group or a disulphimide group

$-SO_2-NH-SO_2-R^3$,

wherein $R^3$ respresents alkyl or aryl.

4. Recording material according to Claim 3, characterised in that $A^2$ represents a group corresponding to the following formula:

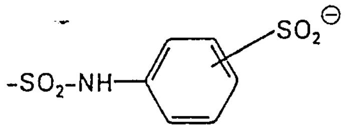

5. Recording material according to one of the Claims 1 to 4, characterised in that G represents a hydroxyl group.

6. Photographically produced colour image, consisting of an image receptor layer arranged on a layer support and having a cationic mordant and, contained therein, an image-wise distribution of a cyan image dye, characterised in that the image dye present is a copper or nickel complex of an azo dye corresponding to the following formula:

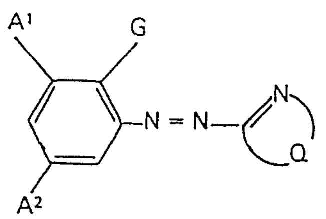

wherein

$A^1$ and $A^2$ represent electronegative substituents for whose meta sigma values $\sigma_m$ (according to D.H. McDaniel and H.C. Brown in J. Org. Chem. 23, 420 et seq (1958)) at least one of the following three relationship applies:

1. $\sigma_m(A^1), \sigma_m(A^2) \geqslant +0.33$
2. $\sigma_m(A^1) + \sigma_m(A^2) \geqslant +0.75$
3. $\sigma_m(A^1) \geqslant +0.33$; $A^2 = SO_2\text{-}X$

wherein

X respresents H, $-OH$, $-NH_2$, -NH-Y or a cyclic amino group and

Y represents alkyl, aryl, alkyl sulphonyl, arylsulphonyl or acyl;

Q represents a group for completing a 2-amino-3-hydroxy pyridine ring, a 4,5- diarylimidazole ring or a 4-hydroxy-isoquinoline ring linked through the 1-position;

G represents a group capable of chelate formation.

7. Colour image according to Claim 6, characterised in that $A^1$ and $A^2$ have the following meaning:

Halogen, $-NO_2$, -CN, $-CF_3$, $-OCF_3$

-CO-R (R = H, alkyl, aryl),

-COOR (R = alkyl),

$-CO\text{-}NR^1R^2$ ($R^1$ = H, alkyl, aryl; $R^2$ = H, alkyl; or $R^1$ and $R^2$ = groups for completing a cyclic amino group),

$-SO_2\text{-}R$ (R = alkyl, aryl),

$-SO_2\text{-}NR^1R^2$ (R = H, alkyl, aralkyl, aryl; $R^2$ = H, alkyl; or $R^1$ and $R^2$ = groups for completing a 4-membered ro 7-membered cyclic amino group optionally containing a further hetero atom),

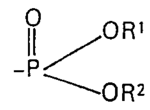

($R^1$, $R^2$ = alkyl; or $R^1$ and $R^2$ = 1,2- or 1,3-alkylene), all the alkyl groups, R, $R^1$ and $R^2$, containing from 1 to 4 carbon atoms.

8. Colour image according to Claim 6 or Claim 7, characterised in that $A^2$ represents a sulphamoyl group, a sulpho group or a disulphimide group.

9. Colour image according to Claim 8, characterised in that $A^2$ represents a group corresponding to the following formula:

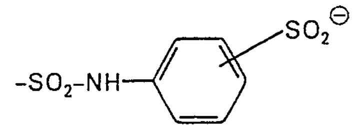

10. Azo dye capable of complex formation by metal ions, corresponding to the following formula:

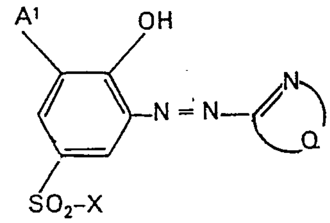

wherein

Q represents a group for completing a 4-hydroxy-1-isoquinoline ring;

$A^1$ represents Cl, $-NO_2$, -CN or $-CF_3$ and

X represents H, -OH, $-NH_2$, -NH-Y or a cyclic amino group, Y representing alkyl, aryl, alkylsulphonyl, arylsulphonyl or acyl.

**Revendications**

1. Support d'enregistrement photographique pour l'obtention de photographies en couleurs par le procédé de transfert par diffusion de couleurs, qui comporte en association avec au moins une couche photosensible d'émulsion à l'halogénure d'argent, un composé chromogène non diffusible, à partir duquel un colorant azoïque diffusible pouvant être complexé par des ions métalliques est libéré dans les conditions du développement alcalin comme fonction du développement de la couche d'émulsion à l'halogénure d'argent, caractérisé en ce que le colorant azoïque répond à la formule II suivante:

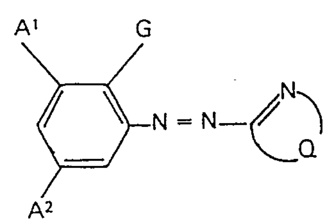

dans laquelle
$A^1$ et $A^2$ désignent des substituants électronégatifs pour les valeurs sigma méta $\sigma_m$ (selon D.H. McDaniel et H.C. Brown in J. Org. Chem. 23, pages 420 et suivantes (1958)) desquels l'une au moins des trois relations suivantes est valable:
1. $\sigma_m(A^1), \sigma_m(A^2 \geqslant +0{,}33$;
2. $\sigma_m(A^1) + \sigma_m(A^2 \geqslant +0{,}75$;
3. $\sigma_m(A^1) \geqslant +0{,}33$ et
$A^2 = -SO_2X$, X représentant H, -OH, $-NH_2$, -NH-Y ou un groupe aminocyclique et
Y représentant un groupe alkyle, aryle, alkylsulfonyle, arylsulfonyle ou acyle;
Q est un reste complétant un noyau de 2-amino-3-hydroxypyridine, un noyau de 4,5-diarylimidazole ou un noyau de 4-hydroxyisoquinoléine lié par la position 1; et
G est un groupe apte à la formation d'un chélate.

2. Support d'enregistrement suivant la revendication 1, caractérisé en ce que $A^1$ et $A^2$ désignent: un halogène, un groupe $-NO_2$, -CN, $-CF_3$, $-OCF_3$, -CO-R (R = H, alkyle, aryle), -COOR (R = alkyle), $-CO-NR^1R^2$ ($R^1$ = H, alkyle, aryle; $R^2$ = H, alkyle; ou bien $R^1$ et $R^2$ = restes complétant un groupe aminocyclique), $-SO_2-R$ (R = alkyle, aryle), $-SO_2-NR^1R^2$ (R = H, alkyle, aralkyle, aryle; $R^2$ = H, alkyle; ou bien $R^1$ et $R^2$ = restes complétant un groupe amino cyclique pentagonal à heptagonal contenant éventuellement un autre hétéroatome),

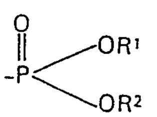

($R^1$, $R^2$ = alkyle; ou bien $R^1$ et $R^2$ = 1,2- ou 1,3-alkylène), tous les restes alkyle, R, $R^1$ et $R^2$ contenant 1 à 4 atomes de carbone.

3. Support d'enregistrement suivant la revendication 1 ou 2, caractérisé en ce que $A^2$ désigne un groupe sulfamoyle, un groupe sulfo ou un groupe disulfimide
$-SO_2-NH-SO_2-R^3$,
$R^3$ désignant un groupe alkyle ou aryle.

4. Support d'enregistrement suivant la revendication 3, caractérisé en ce que $A^2$ est un groupe de formule suivante:

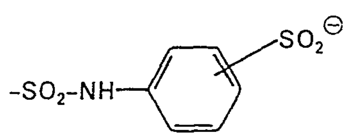

5. Support d'enregistrement suivant l'une des revendications 1 à 4, caractérisé en ce que G est un groupe hydroxyle.

6. Image en couleurs produite photographiquement, constituée par une couche de réception de l'image disposée sur un support d'émulsion, avec un mordant cationique et avec répartition conformément à l'image d'un colorant d'image vert-bleu, caractérisée en ce que le colorant d'image est un complexe de cuivre ou de nickel d'un colorant azoïque de formule suivante:

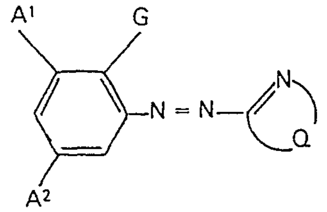

dans laquelle
$A^1$ et $A^2$ désignent des substituants électronégatifs pour les valeurs sigma méta $\sigma_m$ (selon D.H. McDaniel et H.C. Brown in J. Org. Chem. 23, pages 420 et suivantes (1958)) desquels au moins l'une des trois relations suivantes est valable:
1. $\sigma_m(A^1), \sigma_m(A^2) \geqslant +0{,}33$
2. $\sigma_m(A^1) + \sigma_m(A^2) \geqslant +0{,}75$;
3. $\sigma_m(A^1) \geqslant +0{,}33$;
$A^2 = SO_2-X$, X représentant H, -OH, $-NH_2$, -NH-Y ou un groupe aminocyclique et
Y étant un groupe alkyle, aryle, alkylsulfonyle, arylsulfonyle ou acyle;
Q est un reste destiné à compléter un noyau de 2-amino-3-hydroxypyridine, un noyau de 4,5-diarylimidazole pentagonal à heptagonal contenant éventuellement un autre hétéro-atome ou un noyau de 4-hydroxyisoquinoléine lié par la position 1;
G est un groupe apte à la formation d'un chélate.

7. Photographie en couleurs suivant la revendication 6, caractérisée en ce que $A^1$ et $A^2$ désignent: un halogène, un groupe $-NO_2$, -CN, $-CF_3$, $-OCF_3$, -CO-R (R = H, alkyle, aryle), -COOR (R = alkyle), $-CO-NR^1R^2$ ($R^1$ = H, alkyle, aryle; $R^2$ = H, alkyle); ou bien $R^1$ et $R^2$ = restes destinés à compléter un groupe aminocyclique), $-SO_2-R$ (R = alkyle, aryle), $-SO_2-NR^1R^2$ (R = H, alkyle, aralkyle, aryle; $R^2$ = H, alkyle; ou bien $R^1$ et $R^2$ = restes destinés à compléter un groupe amino cyclique pentagonal à heptagonal contenant éventuellement un autre hétéroatome), un groupe

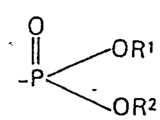

($R^1$, $R^2$ = alkyle; ou bien $R^1$ et $R^2$ = 1,2- ou 1,3-alkylène), tous les restes alkyle R, $R^1$ et $R^2$ contenant 1 à 4 atomes de carbone.

8. Photographie en couleurs suivant la revendication 6 ou 7, caractérisée en ce que $A^2$ désigne un groupe sulfamoyle, un groupe sulfo ou un groupe disulfimide.

9. Photographie en couleurs suivant la revendication 8, caractérisée en ce que $A^2$ est un groupe de formule suivante:

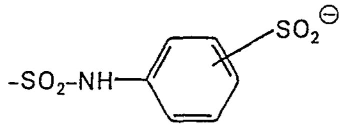

10. Colorant azoïque complexable par des ions métalliques, de formule

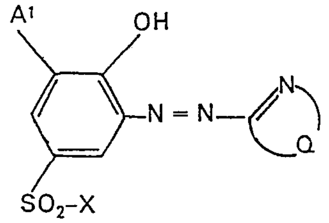

dans laquelle

Q désigne un reste destiné à compléter un noyau de 4-hydroxy-1-isoquinoléine;

$A^1$ représente Cl, $-NO_2$, -CN ou $CF_3$ et

X représente H, -OH, $-NH_2$, -NH-Y ou un groupe aminocyclique, Y désignant un groupe alkyle, aryle, alkylsulfonyle, arylsulfonyle ou acyle.